(19) **Europäisches Patentamt European Patent Office Office européen des brevets**

(11) **EP 4 403 360 A1**

(12) # EUROPEAN PATENT APPLICATION
published in accordance with Art. 153(4) EPC

(43) Date of publication:
**24.07.2024 Bulletin 2024/30**

(21) Application number: **22869723.1**

(22) Date of filing: **09.08.2022**

(51) International Patent Classification (IPC):
***B32B 27/36*** (2006.01)       ***B05D 7/04*** (2006.01)
***C08J 7/043*** (2020.01)

(52) Cooperative Patent Classification (CPC):
**B05D 7/04; B32B 27/36; C08J 7/043**

(86) International application number:
**PCT/JP2022/030367**

(87) International publication number:
**WO 2023/042576 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2021   JP 2021151880
30.03.2022   JP 2022055751
28.04.2022   JP 2022074191**

(71) Applicant: **Toray Industries, Inc.
Tokyo 103-8666 (JP)**

(72) Inventors:
• **IWAYA, Tadahiko**
  **Otsu-shi, Shiga 520-8558 (JP)**
• **OTA, Kazuyoshi**
  **Otsu-shi, Shiga 520-8558 (JP)**
• **SAWAMOTO, Keiko**
  **Otsu-shi, Shiga 520-8558 (JP)**
• **YAMAMOTO, Ayaka**
  **Otsu-shi, Shiga 520-8558 (JP)**

(74) Representative: **Mewburn Ellis LLP
Aurora Building
Counterslip
Bristol BS1 6BX (GB)**

(54) **LAMINATED POLYESTER FILM, LAMINATE, AND METHOD FOR PRODUCING LAMINATED POLYESTER FILM**

(57)     There are provided a laminated polyester film which is excellent in coating uniformity and adhesiveness of water-based coating, a laminate using the same, and a method for producing a laminated polyester film. The laminated polyester film of the present invention includes an easy-adhesion layer (X) on an outermost surface of at least one side of a polyester base material, in which a ratio (yh/yd) of hydrogen bonds ($\gamma$h) to a dispersive force ($\gamma$d) in surface free energy of the easy-adhesion layer (X) is 0.250 or less. In addition, the laminated polyester film according to another aspect of the present invention includes an easy-adhesion layer (X) on an outermost surface on at least one side of a polyester base material, in which an advancing angle $\theta$a of water in the easy-adhesion layer (X) is 75.0° or more and 110.0° or less, and a receding angle $\theta$r of water is 5.0° or more and 40.0° or less.

[Fig. 1]

EP 4 403 360 A1

**Description**

TECHNICAL FIELD

The present invention relates to a laminated polyester film which is excellent in coating uniformity and adhesiveness with respect to a water-based coating material, a laminate using the same, and a method for producing a laminated polyester film.

BACKGROUND ART

Thermoplastic resin films, in particular, polyester films have excellent properties such as mechanical properties, electrical properties, dimensional stability, transparency, and chemical resistance, and therefore are widely used as magnetic recording materials, packaging materials, optical films such as antireflection films, diffusion sheets, or prism sheets used for flat displays, transparent touch panels, and the like. However, in a case where a layer having a desired function is formed by applying and laminating another material on a polyester film in order to suitably use the polyester films for applications thereof, there is a disadvantage that adhesiveness deteriorates depending on a material to be used.

Therefore, as one method of imparting adhesiveness to a surface of a polyester film, a method of applying various resins to a surface of a polyester film and providing a coating layer (easy-adhesion layer) having an adhesive function is known. As a specific example, for example, a method for improving adhesiveness by providing a coating layer made of a polyurethane resin, an acrylic resin into which a hydrophilic functional group is introduced, or a polyester resin, on a surface of a polyester film is known (Patent Documents 1, 2, 3, and 4).

In addition, particularly in recent years, in a case where various functional materials are applied and laminated on a polyester film, a water-based coating material having a reduced amount of organic solvent and having water as a main solvent or a dispersion medium has often been used from the viewpoint of reducing an environmental impact. On the other hand, with respect to such a water-based coating material, the conventional easy-adhesion layer as described above has problems in that not only can sufficient adhesiveness not be obtained, but also vacant holes are formed in a part thereof because a coating layer does not sufficiently wet-spread or coating crawling in which a thickness becomes uneven occurs.

In order to solve such problems, as a technique for ensuring adhesiveness to a water-based coating material, for example, Patent Document 5 proposes a technique for imparting adhesiveness of an aqueous ink by incorporating a water-soluble polymer material into an easy-adhesion layer, and Patent Document 6 proposes a technique for imparting adhesiveness with a hydrophilic adhesive by using a carboxyl group-containing polyurethane and a crosslinking agent in combination.

PRIOR ART DOCUMENTS

PATENT DOCUMENTS

Patent Document 1: Japanese Patent Laid-open Publication No. 2009-214531
Patent Document 2: Japanese Patent Laid-open Publication No. 2011-140140
Patent Document 3: International Publication WO 2014/156411
Patent Document 4: Japanese Patent Laid-open Publication No. 2008-280421
Patent Document 5: Japanese Patent Laid-open Publication No. 2002-234960
Patent Document 6: Japanese Patent Laid-open Publication No. 2019-28385

SUMMARY OF THE INVENTION

PROBLEMS TO BE SOLVED BY THE INVENTION

First, with respect to the techniques of Patent Documents 1 to 4, the present inventors have verified adhesiveness to a water-based coating, and as a result, it has been difficult to control adhesiveness to a water-based coating material only by simple changes in a functional group or a molecular weight of an acrylic resin or a polyester resin, a main chain skeleton, and the like, and even in a case where the same polyester resin is used, adhesiveness may change depending on production conditions in some cases, and it has been difficult to stably obtain sufficient adhesiveness.

For example, particularly in the polyester resin having substantially no carboxylic acid groups according to the technique of Patent Document 2, it has been difficult to apply a water-based coating material uniformly. In addition, in the technique of Patent Document 3, a decrease in adhesiveness due to the presence of an acrylic urethane resin was observed. Furthermore, it was found that the adhesiveness of the water-based coating material was greatly different depending on the presence or absence of a melamine-based compound even within the same design.

On the other hand, in a hydrophilic film having a block copolymer of Patent Document 4, which has a design focusing on an advancing angle and a receding angle of water, it was found that crawling easily occurs because the receding angle is high before deprotection, whereas after the deprotection, the advancing angle is low and the coatability of the water-based coating material is excellent, but sufficient adhesiveness cannot be obtained.

On the other hand, with regard to the technique of Patent Document 5, adhesiveness to a specific ink material has been confirmed, but since the water-soluble material is prone to dissolve at the time of applying the water-based coating material, it is not possible to sufficiently wet and spread the water-based coating material, it is difficult to obtain a uniform coating film, and it has become clear that transparency is prone to be lost when a colorless and transparent functional layer is formed, and blocking in which front and back surfaces are in close contact with each other when a film is wound up easily occurs due to contribution of moisture in the air. Furthermore, with regard to the technique of Patent Document 6, a problem was particularly to improve the coatability of a low-viscosity water-based coating material.

Therefore, an object of the present invention is to provide a laminated polyester film which is excellent in coating uniformity and adhesiveness with respect to a water-based coating material, a laminate, and a method for producing a laminated polyester film, while eliminating the disadvantages described above.

SOLUTIONS TO THE PROBLEMS

The present invention has the following configurations.
[1] A laminated polyester film including an easy-adhesion layer (X) on an outermost surface of at least one side of a polyester base material, in which a ratio ($\gamma$h/$\gamma$d) of hydrogen bonds ($\gamma$h) to a dispersive force ($\gamma$d) in surface free energy of the easy-adhesion layer (X) is 0.250 or less. (Hereinafter, sometimes referred to as a "first aspect")

[2] A laminated polyester film including an easy-adhesion layer (X) on an outermost surface on at least one side of a polyester base material, in which an advancing angle $\theta$a of water in the easy-adhesion layer (X) is 75.0° or more and 110.0° or less, and a receding angle $\theta$r of water is 5.0° or more and 40.0° or less. (Hereinafter, sometimes referred to as a "second aspect")

[3] The laminated polyester film according to [2], including an easy-adhesion layer (X) on an outermost surface of at least one side of a polyester base material, in which a ratio ($\gamma$h/$\gamma$d) of hydrogen bonds ($\gamma$h) to a dispersive force ($\gamma$d) in surface free energy of the easy-adhesion layer (X) is 0.250 or less.

[4] The laminated polyester film according to any one of [1] to [3], in which a dispersive force ($\gamma$d) on a surface of the easy-adhesion layer (X) is 32.0 mN/m or more.

[5] The laminated polyester film according to any one of [1] to [4], in which an average elastic modulus of the easy-adhesion layer (X) in a 5 um square measured by AFM is 1.0 GPa or more.

[6] The laminated polyester film according to any one of [1] to [5], in which the area of the domain of the easy-adhesion layer (X) in a 1 um square elastic modulus variation image measured by AFM is 500 nm$^2$ or less.

[7] The laminated polyester film according to any one of [1] to [6], which has a haze value of 2.0% or less.

[8] The laminated polyester film according to any one of [1] to [7], in which the easy-adhesion layer (X) contains at least two kinds of resins or compounds selected from a polyester resin, an oxazoline compound, and a carbodiimide compound.

[9] The laminated polyester film according to any one of [1] to [8], in which at least one surface satisfies (1) and (2) .

(1) A roughness average Ra is 1.0 nm or more and 20.0 nm or less.
(2) A ten-point average roughness Rz is 50.0 nm or more and 400.0 nm or less.

[10] The laminated polyester film according to any one of [1] to [9], in which the polyester base material contains at least one of materials derived from biomass and recycling materials.

[11] A laminate including a processed layer (Y) on a surface of the easy-adhesion layer (X) of the laminated polyester film according to any one of [1] to [10].

[12] The laminate according to [11], in which the processed layer (Y) has a water content ratio of 50 wt ppm or more.

[13] The laminate according to [11] or [12], in which the processed layer (Y) contains at least one of a hard coating material, an adhesive material, and a printing ink, and contains a dispersant (D).

[14] A method for producing the laminated polyester film according to any one of [1] to [10], the method including a step of forming the easy-adhesion layer (X) by heat curing a coating composition at 170°C or higher.

EFFECTS OF THE INVENTION

According to the present invention, it is possible to provide a laminated polyester film which is particularly excellent in coating uniformity and adhesiveness of a water-based coating material.

BRIEF DESCRIPTION OF THE DRAWINGS

Fig. 1 is an elastic modulus variation image of a surface of an easy-adhesion layer (X) according to an embodiment of the present invention.
Fig. 2 is a variation image of an elastic modulus of a surface of a laminated polyester film having a problem to be solved by the present invention.

EMBODIMENTS OF THE INVENTION

A water-based coating material generally has more excellent environmental suitability than an organic solvent-based coating material. However, on the other hand, there is a problem that the surface free energy of a liquid component is high and it is difficult for it to wet-spread on many surfaces including a surface of a polyester film. As a result of studies by the present inventors on an easy-adhesion layer suitable for application of such a water-based coating material, it has been found that it is difficult to explain by simple control of surface free energy, and it is possible to form an easy-adhesion layer in which coatability and adhesiveness are improved by satisfying specific preferable conditions. That is, in a first aspect, it was found that the wettability and the adhesiveness after drying can be controlled by controlling a dispersive force ($\gamma$d) and hydrogen bonds ($\gamma$h) in the surface free energy to be within specific ranges, thereby developing the laminated polyester film of the present invention. Details thereof will be described below. Hereinafter, a solution or a dispersion used for forming the easy-adhesion layer (X) of the present invention is referred to as a "coating composition". On the other hand, a solution or a dispersion to be applied for forming a layer having a desired function on the easy-adhesion layer (X) of the laminated polyester film of the present invention is referred to as a "water-based coating material".

The laminated polyester film according to the first aspect includes an easy-adhesion layer (X) on an outermost surface of at least one side of a polyester base material, in which a ratio ($\gamma$h/$\gamma$d) of hydrogen bonds ($\gamma$h) to a dispersive force ($\gamma$d) in surface free energy of the easy-adhesion layer (X) is 0.250 or less.

Here, the dispersive force ($\gamma$d) is a parameter related to dispersion of a water-based coating material component, that is, wet spreading, and as a value thereof becomes higher, it becomes easier to secure the wettability of the water-based coating material. On the other hand, the hydrogen bonds ($\gamma$h) is a parameter representing a strength of interaction with water molecules. In general, since the interaction between water molecules is strong, this value is generally large in a case where a material that is easily compatible with water is used. However, as a result of studies by the present inventors, it was found that when the hydrogen bonds ($\gamma$h) is small, high wettability and adhesiveness are easily obtained. The reason for this is presumed to be that, on a surface having a high hydrogen bonds ($\gamma$h), a force of attracting the water-based coating material to a surface is strong, and the water-based coating material cannot be sufficiently wet-spread. It is thought that there are a plurality of factors increasing the hydrogen bonds ($\gamma$h), such as material design and a production method, but two factors are thought to have a particular influence, that is, A. keeping a formulation amount of a specific material that is readily compatible with water to a certain amount or less, and B. sufficiently promoting a crosslinking reaction of the easy-adhesion layer and suppressing permeation of the water-based coating material. Hereinafter, the dispersive force ($\gamma$d) may be simply referred to as dispersive force or $\gamma$d, and the hydrogen bonds ($\gamma$h) may be simply referred to as hydrogen bonds or $\gamma$h.

It is important that the laminated polyester film according to the first aspect include an easy-adhesion layer (X) on an outermost surface of at least one side of a polyester base material, in which a ratio ($\gamma$h/$\gamma$d) of hydrogen bonds ($\gamma$h) to a dispersive force ($\gamma$d) in surface free energy of the easy-adhesion layer (X) is 0.250 or less. When $\gamma$h/$\gamma$d of the easy-adhesion layer (X) is 0.250 or less, both sufficient wettability and adhesiveness can be achieved. From the viewpoint, $\gamma$h/$\gamma$d of the easy-adhesion layer (X) is preferably 0.200 or less, more preferably 0.140 or less, and still more preferably 0.130 or less. In a case where $\gamma$h/$\gamma$d of the easy-adhesion layer (X) exceeds 0.250, it is difficult to uniformly conform the water-based coating material to the surface, and as a result, partial peeling easily occurs. On the other hand, a lower limit of $\gamma$h/$\gamma$d of the easy-adhesion layer (X) is not particularly limited, but is 0.001 in view of the effective measurement accuracy and the fact that a value of each component does not theoretically take a negative value.

Furthermore, in the laminated polyester film of the present invention, the dispersive force ($\gamma$d) on the surface of the easy-adhesion layer (X) is preferably 32.0 mN/m or more, and more preferably 35.0 mN/m or more. When the dispersive force ($\gamma$d) on the surface of the easy-adhesion layer (X) is 32.0 mN/m or more, the effect of spreading the water-based coating material can be sufficiently secured, and as a result, sufficient coatability and adhesiveness can be realized. There is no preferable value in terms of characteristics for an upper limit of the dispersive force ($\gamma$d) of the easy-adhesion layer (X), but the dispersive force ($\gamma$d) may be 60.0 mN/m which is within a range that can be practically achieved by a preferable coating composition and a production method for forming the easy-adhesion layer (X) in the laminated polyester film of the present invention.

The details of a method for measuring and calculating the dispersive force ($\gamma$d) and the hydrogen bonds ($\gamma$h) of the easy-adhesion layer (X) will be described later, but values thereof can be controlled by constituent components contained in the easy-adhesion layer (X), a production method, and combinations thereof. Specifically, it is possible to adjust the wettability to the water-based coating material by functional group species that a resin or a compound which is a constituent component has in a side chain, a molecular weight of a unit structure in a case of using a polymer, a degree of progress of a crosslinking reaction, and the like. Preferred constituent materials and a production method will be described later in detail.

Furthermore, as a second aspect, the present inventors have found the following features as characteristics of the easy-adhesion layer (X) correlated with a preferable range of the surface energy described above. That is, it was found that wettability and adhesiveness after drying can be controlled by controlling an advancing angle (advancing contact angle) of water and a receding angle (receding contact angle) of water in the easy-adhesion layer (X) within specific ranges. Details thereof will be described below.

The laminated polyester film of the present invention includes an easy-adhesion layer (X) on an outermost surface on at least one side of a polyester base material, in which an advancing angle θa of water in the easy-adhesion layer (X) is 75.0° or more and 110.0° or less, and a receding angle θr of water is 5.0° or more and 40.0° or less.

The advancing angle θa of water refers to a contact angle in a process in which a water droplet expands when water is continuously supplied to the easy-adhesion layer (X). The receding angle θr of water refers to a contact angle in a process in which a water droplet shrinks when water is sucked from the water droplet formed in advance in the easy-adhesion layer (X). The advancing angle θa and the receding angle θr of water in the easy-adhesion layer (X) are measured by an expansion-contraction method, and as a measuring apparatus, for example, a contact angle Drop Master DM-501 manufactured by Kyowa Interface Science Co., Ltd. can be used. Note that details of a measurement method and conditions when using the same device are shown in Examples.

As a numerical value of the advancing angle θa of water in the easy-adhesion layer (X) becomes higher, fluidity of a water-based coating agent on the easy-adhesion layer (X) becomes in a lower state. Therefore, by increasing the advancing angle θa of water, the water-based coating agent that has once come into contact with the easy-adhesion layer (X) comes into close contact with the easy-adhesion layer (X), and it becomes easy to exhibit favorable adhesiveness between the easy-adhesion layer (X) and a layer formed from the water-based coating material in a subsequent drying step. On the other hand, as a numerical value of the receding angle θr of water becomes lower, once the easy-adhesion layer (X) and the water-based coating agent come into contact with each other, the easy-adhesion layer (X) is prone to be wetted instantaneously. Therefore, by lowering the receding angle θr of water, crawling of the water-based coating agent in a drying process is reduced, and a favorable coatability is easily exhibited.

The laminated polyester film of the present invention includes an easy-adhesion layer (X) on an outermost surface on at least one side of a polyester base material, and it is important that an advancing angle θa of water in the easy-adhesion layer (X) is 75.0° or more and 110.0° or less θr. When the advancing angle θa of water in the easy-adhesion layer (X) is 75.0° or more and 110.0° or less, the fluidity of water on the easy-adhesion layer (X) is suppressed, and favorable adhesiveness between the easy-adhesion layer (X) and the water-based coating material can be exhibited. From the above viewpoint, the advancing angle θa of water in the easy-adhesion layer (X) is preferably 75.0° or more and 100.0° or less. When the advancing angle θa of water is less than 75.0°, the flow of the water-based coating material on the easy-adhesion layer (X) increases, and the adhesiveness between the easy-adhesion layer (X) and the water-based coating material decreases. On the other hand, when the advancing angle θa of water is larger than 110.0°, the water-based coating material is repelled on the easy-adhesion layer (X), and the adhesiveness is locally deteriorated.

Furthermore, in the laminated polyester film of the present invention, it is important that the receding angle Θr of water in the easy-adhesion layer (X) is 5.0° or more and 40.0° or less. When the receding angle Θr of water in the adhesive layer (X) is 5.0° or more and 40.0° or less, wettability when water is brought into contact with the easy-adhesion layer (X) is improved, and a favorable coatability between the easy-adhesion layer (X) and the water-based coating material can be exhibited. From the above viewpoint, the receding angle Θr of water in the adhesive layer (X) is preferably 10.0° or more and 30.0° or less. A state in which the receding angle Θr of water is less than 5.0° is a state in which a shape of a water droplet used for measurement cannot be maintained, and it is difficult to evaluate the receding angle Θr of water because the water droplet deviates from a measurable range. On the other hand, when the receding angle Θr of water in the adhesive layer (X) is larger than 40.0°, crawling of the water-based coating material occurs at the time of application onto the easy-adhesion layer (X) or in a subsequent drying process, and the adhesiveness is locally deteriorated.

The advancing angle θa of water and the receding angle θr of water in the easy-adhesion layer (X) can be controlled by constituent components contained in the easy-adhesion layer (X), a manufacturing method, and a combination thereof. Specifically, the advancing angle θa of water and the receding angle θr of water can be adjusted by functional group species that a resin or a compound which is a constituent component of the easy-adhesion layer (X) has in a side chain, a molecular weight of a unit structure in a case of using a polymer, a degree of progress of a crosslinking reaction (which can be enhanced by heat curing a coating composition at 170°C or higher), a surface roughness of the polyester base material or the easy-adhesion layer (X), and the like. Then, wettability with respect to the water-based coating material can be adjusted by adjusting the advancing angle θa of water and the receding angle θr of water. Details of preferable constituent materials, coating compositions, and a production method from the above viewpoint will be described later.

In the present invention, it is preferable that the advancing angle θa of water and the receding angle θr of water in the easy-adhesion layer (X) satisfy the above ranges, and the ratio ($\gamma$h/$\gamma$d) of the hydrogen bonds ($\gamma$h) to the dispersive force ($\gamma$d) in surface free energy of the easy-adhesion layer (X) satisfies the above range.

In addition, in the present invention, it is preferable that the advancing angle θa of water and the receding angle θr of water in the easy-adhesion layer (X) satisfy the above ranges, and the dispersive force ($\gamma$d) in the surface of the easy-adhesion layer (X) satisfies the above range.

Furthermore, in the present invention, it is preferable that the advancing angle θa of water and the receding angle θr of water in the easy-adhesion layer (X) satisfy the above ranges, and the ratio ($\gamma$h/$\gamma$d) of the hydrogen bonds ($\gamma$h) to the dispersive force ($\gamma$d) in surface free energy of the easy-adhesion layer (X) and the dispersive force ($\gamma$d) in the surface of the easy-adhesion layer (X) satisfy the above ranges.

Hereinafter, details of preferred embodiments of the laminated polyester film of the present invention will be described.

<Polyester Film>

The laminated polyester film of the present invention includes an easy-adhesion layer (X) on at least one surface of a polyester base material. Polyester is a general term for polymers having an ester bond as a main bonding chain of a main chain, and one containing, as a main constituent component, at least one constituent component selected from ethylene terephthalate, propylene terephthalate, ethylene-2,6-naphthalate, butylene terephthalate, propylene-2,6-naphthalate, ethylene-$\alpha$,$\beta$-bis(2-chlorophenoxy)ethane-4,4'-dicarboxylate, and the like can be preferably used.

Here, the main constituent component refers to a constituent unit contained in an amount of more than 50 mol% and 100 mol% or less when a total amount of constituent units constituting a resin is 100 mol%. The main constituent component preferably contains the constituent unit in an amount of more than 70 mol%. In addition, the laminated polyester film refers to a sheet-like material having at least two layers and containing polyester as a main component. The main component refers to a component contained in an amount of more than 50 mass% and 100 mass% or less in all the constituent components. The polyester base material refers to a sheet-like material constituting the laminated polyester film, which contains polyester as a main component. In addition, the polyester may contain 30 mol% or less of copolymerization components in all the constituent components as necessary.

As the polyester base material in the laminated polyester film of the present invention, a polyethylene terephthalate film is preferably used from the viewpoint of heat resistance and smoothness. In addition, when heat, shrinkage stress, or the like acts on the laminated polyester film, it is preferable to use a polyethylene-2,6-naphthalate film excellent in heat resistance and rigidity. Here, the polyethylene terephthalate film refers to a film in which polyethylene terephthalate (also including a copolymer) accounts for more than 50 mass% and 100 mass% or less of all components constituting the film, and the same applies to the polyethylene-2,6-naphthalate film.

The polyester base material is preferably biaxially oriented from the viewpoint of thermal stability and mechanical strength. The biaxially oriented polyester film refers to a polyester film showing a pattern oriented in two orthogonal axes by wide-angle X-ray diffraction. In general, the biaxially oriented polyester film is obtained by stretching a non-stretched polyester sheet in two orthogonal directions, for example, by stretching the sheet about 2.5 to 5.0 times in each of a longitudinal direction and a width direction, and then subjecting to a heat treatment to complete crystal orientation. By using the biaxially oriented polyester film as the polyester base material, the thermal stability of the laminated polyester film, particularly, the dimensional stability and the mechanical strength are improved, and flatness is also improved. Here, the longitudinal direction refers to a direction in which the film travels during a production step (in a film roll, a winding direction of a film corresponds thereto), and the width direction refers to a direction orthogonal to the longitudinal direction in a film plane.

In addition, the polyester base material can include various additives, for example, antioxidants, heat resistance stabilizers, weather resistance stabilizers, ultraviolet absorbing agents, organic easy sliding agents, pigments, dyes, organic or inorganic fine particles, fillers, antistatics, and nucleating agents, to the extent that characteristics thereof are not deteriorated.

A thickness of the polyester base material is not particularly limited, is appropriately selected depending on the application and kind, and is usually preferably 10 to 500 $\mu$m, more preferably 20 to 250 $\mu$m, and particularly preferably

30 to 150 um, from the viewpoint of mechanical strength, handleability, and the like. Further, the polyester base material may be a composite film obtained by coextrusion, or may be a film obtained by laminating the obtained films by various methods.

In the laminated polyester film of the present invention, a total light transmittance is preferably 88% or more, and more preferably 90% or more. When the total light transmittance of the laminated polyester film is 88% or more, the laminated polyester film can be suitably used as, for example, an optical film such as an easy-adhesion film for a prism. In addition, since an upper limit of the substantial total light transmittance of the polyester film is 94%, it is preferably 88% or more and less than 94%.

The total light transmittance of the laminated polyester film can be measured by using a measuring apparatus in accordance with JIS "Determination of haze for transparent materials" (K 7136: 2000). In addition, examples of a method of setting the total light transmittance of the laminated polyester film to 88% or more include a method of reducing a reflectance with an air layer by forming a smooth coating layer on the outermost surface of the laminated polyester film, in addition to improving flatness through biaxial stretching as described above.

In addition, in the laminated polyester film of the present invention, a haze value is preferably 2.0% or less, and particularly preferably 1.0% or less. Since transparency is enhanced by setting the haze value of the laminated polyester film within the above range, the laminated polyester film can also be suitably used for an optical film requiring transparency. The lower the haze value, the better it is, and a lower limit is not particularly limited, but the lower limit is 0.1% from the viewpoint of feasibility. Note that, the haze value is also referred to as "haze".

The haze value of the laminated polyester film can be measured by a method in accordance with JIS "Determination of haze for transparent materials" (K 7136: 2000), and details thereof are shown in Examples. In addition, examples of a method for setting the haze value of the laminated polyester film to 2.0% or less include a method for reducing the reflectance at an interface with air by adjusting a surface shape and a refractive index of a coating layer formed on the outermost surface of the polyester film.

<Easy-adhesion Layer (X)>

The laminated polyester film of the present invention includes an easy-adhesion layer (X) on an outermost surface of at least one side of a polyester base material. Here, when another layer (a post-processing layer, a processed layer (Y) to be described later corresponds thereto) is formed by post-processing, the easy-adhesion layer (X) is positioned in the middle between the polyester base material and the post-processing layer, and plays a role of enhancing adhesiveness between the polyester base material and the post-processing layer. The easy-adhesion layer (X) preferably satisfies at least one of "the ratio ($\gamma$h/$\gamma$d) of hydrogen bonds ($\gamma$h) to a dispersive force ($\gamma$d) of 0.250 or less" and "the advancing angle $\theta$a of water of 75.0° or more and 110.0° or less, and the receding angle $\theta$r of water of 5.0° or more and 40.0° or less" on the surface of the easy-adhesion layer (X), and particularly preferably satisfies both thereof. The definition of each parameter is as described above.

From the viewpoint that the easy-adhesion layer (X) plays such a role, in the laminated polyester film of the present invention, outermost surface of at least one side of the polyester base material, preferably one outermost surface serves as the easy-adhesion layer (X). By adopting such an aspect, when the polyester base material and the post-processing layer are laminated with the easy-adhesion layer (X) interposed therebetween, it is easy to handle the laminate as an integrated laminate. The easy-adhesion layer (X) can be designed in consideration of a coatability and adhesiveness of the water-based coating material (details will be described later).

A thickness of the easy-adhesion layer (X) (coating thickness after drying) is preferably 10 to 200 nm, and more preferably 40 to 150 nm. When the coating thickness is 10 nm or more, the adhesiveness described above can be sufficiently secured. On the other hand, when the thickness of the easy-adhesion layer (X) is 200 nm or less, appearance quality such as transparency can be easily maintained high. The thickness of the easy-adhesion layer (X) can be measured by observing a cross section in a direction (thickness direction) perpendicular to a film surface using a transmission electron microscope (TEM).

In the laminated polyester film of the present invention, from the viewpoint of improving a coatability and adhesiveness, an average elastic modulus of the easy-adhesion layer (X) in a 5 $\mu$m square measured with an atomic force microscope (AFM) is preferably 1.0 GPa or more, more preferably 1.5 GPa or more, and particularly preferably 2.0 GPa or more (hereinafter, the "average elastic modulus in a 5 um square measured by AFM" may be referred to as an average elastic modulus). When the average elastic modulus of the easy-adhesion layer (X) is 1.0 GPa or more, a crosslinking reaction sufficiently proceeds in forming the easy-adhesion layer (X) from the coating composition, and an effect of suppressing permeation of the water-based coating material is sufficiently obtained, so that wet-spreading of water on the surface is promoted, and as a result, particularly, a coatability is improved. On the other hand, an upper limit of the average elastic modulus of the easy-adhesion layer (X) is not particularly limited, but is 20 GPa as a practical range from the feasibility in a preferred coating composition and a production method of the present invention.

The average elastic modulus can be measured and calculated by performing analysis based on the JKR contact theory after measurement by a force curve method using AFM, and detailed methods and conditions are shown in Examples. In addition, examples of a method of setting the average elastic modulus to 1.0 GPa or more include a method of forming a resin layer having a higher crosslinking density on the outermost surface of the laminated polyester film by coating or the like.

Furthermore, there is also a preferable form of the elastic modulus distribution in 1 um square measured by an atomic force microscope (AFM). Specifically, there is a preferable form for an "elastic modulus variation image" obtained by smoothing an elastic modulus image (that is, data of a DMT Modulus channel) measured by a measurement method to be described later with Order: 3rd in a Flatten mode of analysis software "NanoScopeAnalysis V1.40" and offsetting an average value to 0 MPa. Specifically, in the "elastic modulus variation image" described above, it is preferable that the variation range of the elastic modulus be small, and it is particularly preferable not to have a coarse domain in order to keep the coatability and adhesiveness of the surface of the easy-adhesion layer (X) uniform and stably express the characteristics.

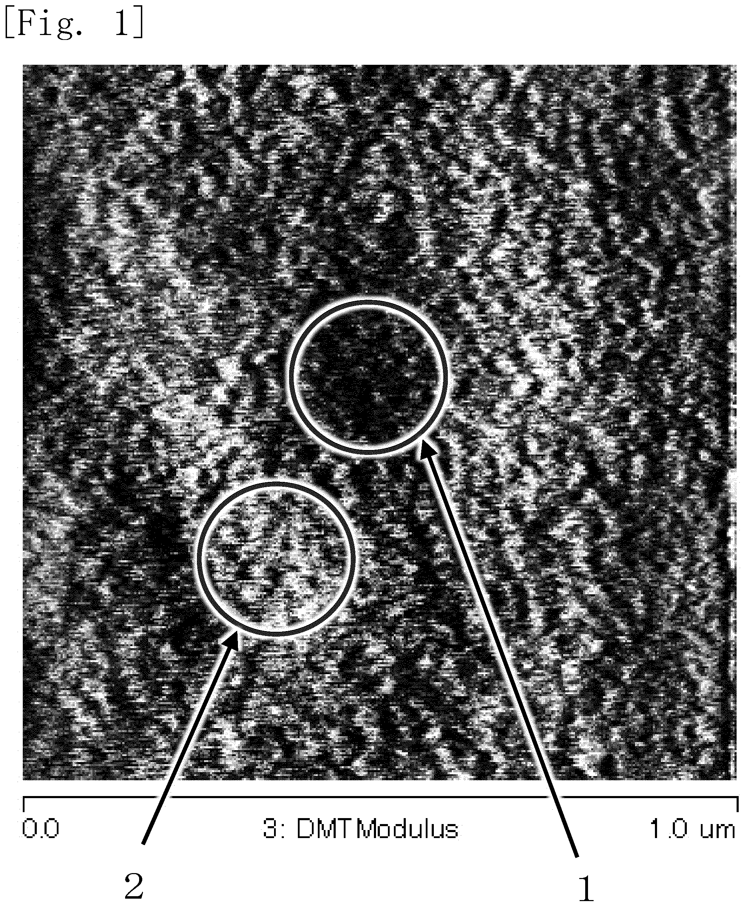

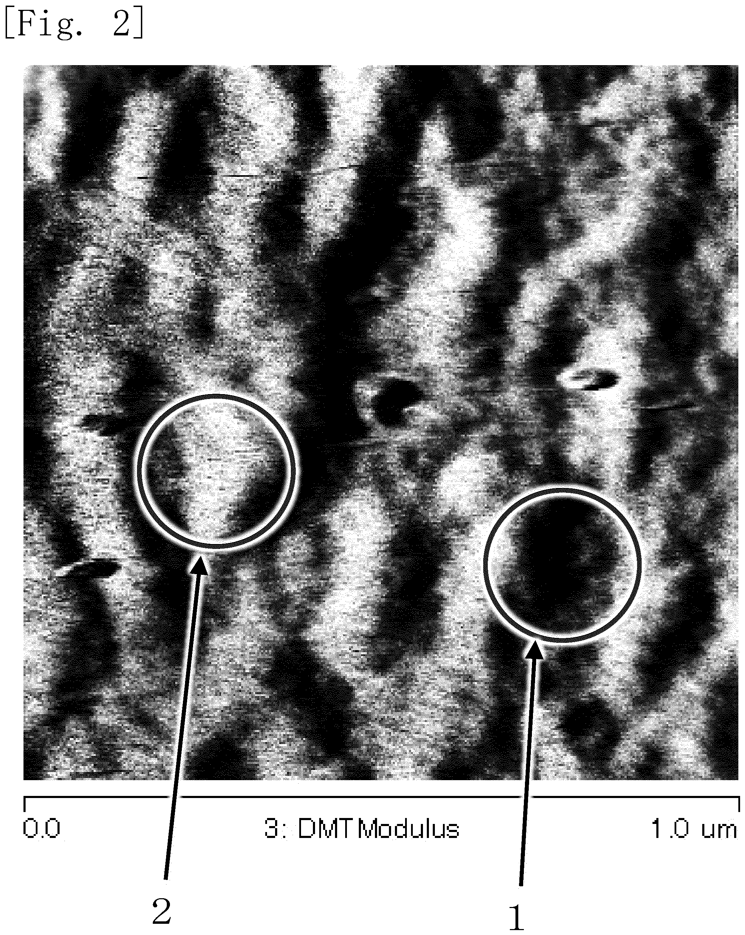

Fig. 1 is an elastic modulus variation image of the surface of the easy-adhesion layer (X) according to an embodiment of the present invention. Specifically, the "elastic modulus variation image" is an elastic modulus variation image of the surface of the easy-adhesion layer (X) of the laminated polyester film prepared in Example 1 as an example of a preferable form of the "elastic modulus variation image". Fig. 2 shows an "elastic modulus variation image" of a commercial product of a conventional laminated polyester film to be compared. A black portion ("typical black portion in elastic modulus variation image" 1 in Figs. 1 and 2) of the "elastic modulus variation image" represents a region having a relatively low elastic modulus, and a white portion ("typical white portion in elastic modulus variation image" 2 in Figs. 1 and 2) represents a region having a relatively high elastic modulus. Each domain of the elastic modulus variation image is formed by local aggregation of a binder resin or a reactive compound to be used, and in a case where the domain is coarsened as shown in Fig. 2, that is, in a case where aggregation of a constituent material is observed, the coatability and adhesiveness of the water-based coating agent with respect to the easy-adhesion layer (X) tend to decrease.

The variation range of the elastic modulus corresponds to Image Rmax obtained by analyzing the above-described "elastic modulus variation image" in the Roughness mode, and is preferably less than 5 GPa and particularly preferably less than 2 GPa. On the other hand, the size of the coarse domain is represented by the average area of each domain colored at a Bearing Area Percent: 10% in the Bearing Analysis mode, and is preferably 500 nm$^2$ or less, more preferably 300 nm$^2$ or less, and particularly preferably 100 nm$^2$ or less. Details of the variation range of the elastic modulus and a method of measuring the area of the domain will be described later.

In the laminated polyester film of the present invention, there are preferable ranges for the roughness average Ra and the ten-point average roughness of each surface from the viewpoints of the control of the advancing angle θa of water and the receding angle θr of water in the easy-adhesion layer (X), and the lubricity, and blocking resistance. Specifically, from the viewpoint of lubricity and blocking resistance, it is preferable that at least one surface satisfy (1) and (2). In addition, from the viewpoint of controlling the advancing angle θa of water and the receding angle θr of water in the easy-adhesion layer (X), it is preferable that the surface of the easy-adhesion layer (X) satisfy (1) and (2).

(1) The roughness average Ra is 1.0 nm or more and 20.0 nm or less.
(2) The ten-point average roughness Rz is 50.0 nm or more and 400.0 nm or less.

From the viewpoint of lubricity and blocking resistance, the roughness average Ra of at least one surface is more preferably 3.0 nm or more and 10.0 nm or less, and the ten-point average roughness Rz is more preferably 100.0 nm or more and 250.0 nm or less. By setting the roughness average Ra of the surface of at least one surface to 1.0 nm or more and setting the ten-point average roughness Rz to 50.0 nm or more, blocking resistance can be imparted to the laminated polyester film. On the other hand, by setting the roughness average Ra to 20.0 nm or less and setting the ten-point average roughness Rz to 400.0 nm or less, falling off of particles and deterioration of appearance can be reduced.

From the viewpoint of suitably controlling the advancing angle θa of water and the receding angle θr of water in the easy-adhesion layer (X), the roughness average Ra of a surface of the easy-adhesion layer (X) is more preferably 3.0 nm or more and 10.0 nm or less, and the ten-point average roughness Rz is more preferably 100.0 nm or more and 250.0 nm or less. By setting the roughness average Ra of a surface of the easy-adhesion layer (X) to 1.0 nm or more, the surface area of the easy-adhesion layer (X) moderately increases, so that even in a case where a coating composition in which the advancing angle θa of water and the receding angle θr of water do not fall within desired ranges on a smooth surface is used, it may be possible to control the advancing angle θa of water and the receding angle θr of water within desired ranges, and lubricity and abrasion resistance can also be imparted to the easy-adhesion layer (X). In addition, by setting the ten-point average roughness Rz of the easy-adhesion layer (X) to 50.0 nm or more, blocking resistance can be imparted to the laminated polyester film. On the other hand, by setting the roughness average Ra of the easy-adhesion layer (X) to 20.0 nm or less and setting the ten-point average roughness Rz to 400.0 nm or less, falling off of particles and deterioration of appearance can be reduced.

<Coating Composition>

Here, a preferred coating composition for forming the easy-adhesion layer (X) of the laminated polyester film of the present invention will be described. The easy-adhesion layer (X) of the laminated polyester film of the present invention is preferably formed of a coating composition containing various binder resins (A) such as a polyester resin, a urethane resin, and an acrylic resin, and a reactive compound (B) selected from an oxazoline compound and a carbodiimide compound, and more preferably contains at least two kinds of components selected from a polyester resin, an oxazoline compound, and a carbodiimide compound. That is, the easy-adhesion layer (X) of the laminated polyester film of the present invention more preferably contains at least two kinds of components selected from a polyester resin, an oxazoline compound, and a carbodiimide compound. The kind and content of each component constituting the coating composition are selected such that the easy-adhesion layer (X) formed using the coating composition satisfies at least one of "the ratio ($\gamma$h/$\gamma$d) of hydrogen bonds ($\gamma$h) to the dispersive force ($\gamma$d) of 0.250 or less" and "the advancing angle $\theta$a of water of 75.0° or more and 110.0° or less, and the receding angle $\theta$r of water of 5.0° or more and 40.0° or less" on the surface of the easy-adhesion layer (X) defined in the present invention.

Here, an aspect in which "at least two kinds of components selected from a polyester resin, an oxazoline compound, and a carbodiimide compound are contained" refers to an aspect in which a polyester resin and an oxazoline compound are contained, an aspect in which a polyester resin and a carbodiimide compound are contained, an aspect in which an oxazoline compound and a carbodiimide compound are contained, and an aspect in which a polyester resin, an oxazoline compound, and a carbodiimide compound are all contained. In this case, even when a plurality of types of components are included, in a case where these components are all included in the same category (example: a case in which plural kinds of oxazoline compounds are contained but a polyester resin or a carbodiimide compound are not contained), it is interpreted that the aspect in which "at least two kinds of components selected from a polyester resin, an oxazoline compound, and a carbodiimide compound are contained" does not apply. It is noted that a case where a polyester resin reacts with an oxazoline compound or a carbodiimide compound to form a new chemical structure can also be interpreted as satisfying the above requirements. In addition, in the above description, in a case where two kinds of the oxazoline compound and the carbodiimide compound belonging to the reactive compound (B) are selected, the easy-adhesion layer (X) may be composed only of a resin obtained by the crosslinking reaction of the reactive compound (B), or the binder resin (A) may further be used in combination. In a case where the binder resin (A) is used in combination, an aspect in which the two kinds of the reactive compounds (B) and the binder resin other than the polyester resin are selected so as to fall within the range specified in the present invention to prepare a coating composition is also preferable.

<Binder Resin (A)>

As the binder resin (A) that forms the easy-adhesion layer (X) in the laminated polyester film of the present invention, any material can be used as long as $\gamma$h/$\gamma$d, which is a parameter related to the surface free energy described above, is 0.250 or less, and/or the advancing angle $\theta$a of water is 75.0° or more and 110.0° or less, and the receding angle $\theta$r of water is 5.0° or more and 40.0° or less, for example, a polyester resin, an acrylic resin, a urethane resin, an epoxy resin, and the like can be used alone or in combination of plural kinds thereof so as to satisfy the above range. On the other hand, it is particularly preferable to use a polyester resin from the viewpoint of adjusting compatibility with the water-based coating material.

As the dicarboxylic acid component as a raw material of the polyester resin, aromatic, aliphatic, and alicyclic dicarboxylic acids can be used. As the aromatic dicarboxylic acid, for example, terephthalic acid, isophthalic acid, orthophthalic acid, phthalic acid, 2,5-dimethylterephthalic acid, 1,4-naphthalenedicarboxylic acid, biphenyldicarboxylic acid, 2,6-naphthalenedicarboxylic acid, 1,2-bisphenoxyethane-p-p'-dicarboxylic acid, phenylindanedicarboxylic acid, and the like can be used. As the aliphatic and alicyclic dicarboxylic acids, succinic acid, adipic acid, sebacic acid, azelaic acid, dodecanedionic acid, dimer acid, 1,3-cyclopentanedicarboxylic acid, 1,2-cyclohexanedicarboxylic acid, 1,4-cyclohexanedicarboxylic acid, and the like, and ester-forming derivatives thereof can be used.

As the diol component as a raw material of the polyester resin, ethylene glycol, diethylene glycol, polyethylene glycol, propylene glycol, polypropylene glycol, 1,3-propanediol, 1,3-butanediol, 1,4-butanediol, 1,5-pentanediol, 1,6-hexanediol, 1,7-heptanediol, 1,8-octanediol, 1,9-nonanediol, 1,10-decanediol, 2,4-dimethyl-2-ethyl hexane-1,3-diol, neopentyl glycol, 2-ethyl-2-butyl-1,3-propanediol, 2-ethyl-2-isobutyl-1,3-propanediol, 3-methyl-1,5-pentanediol, 2,2,4-trimethyl-1,6-hexanediol, 1,2-cyclohexanedimethanol, 1,3-cyclohexanedimethanol, 1,4-cyclohexanedimethanol, 2,2,4,4-tetramethyl-1, 3-cyclobutanediol, 4,4'-thiodiphenol, bisphenol A, 4,4'-methylene diphenol, 4,4'-(2-norbornylidene)diphenol, 4,4'-dihydroxy biphenol, o-, m-, and p-dihydroxy benzene, 4,4'-isopropylidene phenol, 4,4'-isopropylidene benediol, cyclopentane-1,2-diol, cyclohexane-1,2'-diol, cyclohexane-1,2-diol, cyclohexane-1,4-diol, and the like can be used.

In addition, as the polyester resin, it is also possible to use a modified polyester copolymer, for example, a block copolymer modified with acrylic, urethane, epoxy, or the like, a graft copolymer, or the like.

It is particularly preferable that the polyester resin has a functional group in a side chain thereof, from the viewpoint of forming a dense coating film by a crosslinking reaction with the reactive compound (B) to be described later and optimally adjusting the ratio ($\gamma$h/$\gamma$d) of the hydrogen bonds ($\gamma$h) to the dispersive force ($\gamma$d) in the surface free energy, the advancing angle $\theta$a of water, and the receding angle $\theta$r of water. Examples of the functional group include a hydroxyl group, a carboxylic acid group, an amide group, a glycidyl group, an isocyanate group, and a sulfonic acid group. For the amount of functional groups, an acid value or a hydroxyl value can be selected as a representative value, and for example, when the acid value of the polyester resin is less than 5 KOH/mg, coatability or adhesiveness of the water-based coating agent may be deteriorated.

The acrylic resin is not particularly limited, but those composed of alkyl methacrylate and/or alkyl acrylate are preferable.

As the alkyl methacrylate and/or alkyl acrylate, it is preferable to use methacrylic acid, methyl methacrylate, ethyl methacrylate, isopropyl methacrylate, n-butyl methacrylate, isobutyl methacrylate, n-hexyl methacrylate, lauryl methacrylate, 2-hydroxyethyl methacrylate, hydroxypropyl methacrylate, acrylic acid, methyl acrylate, ethyl acrylate, isopropyl acrylate, n-butyl acrylate, isobutyl acrylate, n-hexyl acrylate, lauryl acrylate, 2-ethylhexyl acrylate, 2-hydroxyethyl acrylate, hydroxypropyl acrylate, maleic acid, itaconic acid, acrylamide, N-methylolacrylamide, diacetone acrylamide, and the like. These can be used singly or in combination of two or more kinds thereof.

Since the acrylic resin is a hydrophobic resin, the acrylic resin is also affected by the structure of the side chain, but is considered to contribute to the direction of increasing the dispersive force ($\gamma$d), the advancing angle $\theta$a of water, and the receding angle $\theta$ of water in the easy-adhesion layer (X).

The urethane resin is preferably a resin obtained by reacting a polyhydroxy compound and a polyisocyanate compound by a known polymerization method of a urethane resin such as emulsion polymerization or suspension polymerization.

Examples of the polyhydroxy compound can include polyethylene glycol, polypropylene glycol, polyethylene propylene glycol, polytetramethylene glycol, hexamethylene glycol, tetramethylene glycol, 1,5-pentanediol, diethylene glycol, triethylene glycol, polycaptolactone, polyhexamethylene adipate, polyhexamethylene sebacate, polytetramethylene adipate, polytetramethylene sebacate, trimethylolpropane, trimethylolethane, pentaerythritol, polycarbonate diol, and glycerin. As the polyisocyanate compound, for example, hexamethylene diisocyanate, diphenylmethane diisocyanate, tolylene diisocyanate, isophorone diisocyanate, an adduct of tolylene diisocyanate and trimethylene propane, an adduct of hexamethylene diisocyanate and trimethylolethane, and the like can be used.

Since the urethane resin and a copolymer thereof (for example, an acryl-urethane copolymer, a urethane-modified polyester, or the like) have a highly hydrophilic crosslinked structure, the hydrogen bonds ($\gamma$h) of the present invention tends to be particularly easily increased by excessive addition. A specific upper limit of the addition amount is also affected by the combination with other binder resins, but when the formulation amount of the urethane resin exceeds 5 mass% of the entire binder resin, the adhesiveness may be affected in some cases.

As the epoxy resin, for example, a sorbitol polyglycidyl ether-based crosslinking agent, a polyglycerol polyglycidyl ether-based crosslinking agent, a diglycerol polyglycidyl ether-based crosslinking agent, a polyethylene glycol diglycidyl ether-based crosslinking agent, and the like can be used. As the epoxy resin, commercially available epoxy resins may be used, for example, epoxy compounds "DENACOL" (registered trademark) EX-611, EX-614, EX-614B, EX-512, EX-521, EX-421, EX-313, EX-810, EX-830, EX-850, and the like manufactured by Nagase ChemteX Corporation, diepoxy/polyepoxy-based compounds (SR-EG, SR-8EG, SR-GLG, and the like) manufactured by SAKAMOTO YAKUHIN KOGYO CO., LTD., an epoxy crosslinking agent "EPICLON" (registered trademark) EM-85-75W, CR-5L, and the like manufactured by Dainippon Ink and Chemicals, Inc., can be suitably used, and among these, water-soluble epoxy resins are preferably used.

Since the epoxy resin is a hydrophilic resin, the epoxy resin is also affected by the structure of the side chain, but is considered to contribute to the direction of increasing the hydrogen bonds ($\gamma$h) in the easy-adhesion layer (X) and decreasing the advancing angle $\theta$a of water and the receding angle $\theta$r of water.

<Reactive Compound (B)>

It is particularly preferable that the easy-adhesion layer (X) of the present invention contains the reactive compound (B) from the viewpoint of sufficiently proceeding the crosslinking reaction of the easy-adhesion layer described above and suppressing the permeation of the water-based coating material. As the reactive compound (B), any compound such as an oxazoline compound, a carbodiimide compound, a melamine-based compound, an isocyanate compound, and a combination thereof can be used by being configured to satisfy the range defined in the present invention, but from the viewpoint of designing the surface free energy and/or the advancing angle $\theta$a of water and the receding angle $\theta$r of water, it is preferable to use the oxazoline compound or the carbodiimide compound alone or in combination by being configured to satisfy the range defined in the present invention. Even in a case where the reactive compound (B) forms another chemical structure derived from the compound with a resin component by a crosslinking reaction or the like and the reactive compound (B) alone is not present in the easy-adhesion layer (X), it can be interpreted that the easy-adhesion layer (X) contains the reactive compound (B).

The oxazoline compound is a compound having an oxazoline group as a functional group in the compound, and a compound containing at least one kind of a monomer containing an oxazoline group and formed of an oxazoline group-containing copolymer obtained by copolymerizing at least one kind of other monomer is preferred.

In the oxazoline compound, at least one kind of other monomer used for the monomer containing an oxazoline group is a monomer copolymerizable with the monomer containing an oxazoline group. For example, acrylic acid esters or methacrylic acid esters such as methyl acrylate, methyl methacrylate, ethyl acrylate, ethyl methacrylate, butyl acrylate, butyl methacrylate, 2-ethylhexyl acrylate and 2-ethylhexyl methacrylate, unsaturated carboxylic acids such as acrylic acid, methacrylic acid, itaconic acid and maleic acid, unsaturated nitriles such as acrylonitrile and methacrylonitrile, unsaturated amides such as acrylamide, methacrylamide, N-methylol acrylamide and N-methylol methacrylamide, vinyl esters such as vinyl acetate and vinyl propionate, vinyl ethers such as methyl vinyl ether and ethyl vinyl ether, olefins such as ethylene and propylene, halogen-containing $\alpha,\beta$-unsaturated monomers such as vinyl chloride, vinylidene chloride and vinyl fluoride, $\alpha,\beta$-unsaturated aromatic monomers such as styrene and $\alpha$-methylstyrene and the like can be used, and these may be used alone or in combination of plural kinds thereof as long as the scope of the present invention is satisfied.

Specific oxazoline compounds are not particularly limited, but an addition-polymerizable oxazoline group-containing monomer is preferable, examples thereof can include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, or the like, and these may be used alone or in combination of plural kinds thereof as long as the scope of the present invention is satisfied.

The carbodiimide compound is a compound having, in a molecule, at least one carbodiimide group as a functional group or one cyanamide group in a tautomeric relationship therewith, in the compound. Specific examples of such a carbodiimide compound include dicyclohexylmethane carbodiimide, dicyclohexyl carbodiimide, tetramethylxylylene carbodiimide, and urea-modified carbodiimide, and these may be used alone or in combination of plural kinds thereof as long as the scope of the present invention is satisfied.

Examples of the melamine-based compound that can be used in the laminated polyester film of the present invention include melamine-based compounds having one or more triazine rings and one or more methylol groups in one molecule. By using such a melamine-based compound, the easy-adhesion layer (X) can have a crosslinked structure of methylol groups therein.

As the melamine-based compound, for example, melamine, a methylolated melamine derivative obtained by condensing melamine and formaldehyde, a compound partially or completely etherified by reacting a methylolated melamine with a lower alcohol, and a mixture thereof or the like can be used. Moreover, the melamine-based compound may be either a monomer or a condensate composed of a dimer or higher polymer, or may be a mixture thereof. Examples of the lower alcohol used for etherification include methyl alcohol, ethyl alcohol, isopropyl alcohol, n-butanol, and isobutanol. The functional group has an imino group, a methylol group, or an alkoxymethyl group such as a methoxymethyl group or a butoxymethyl group in one molecule, and examples thereof include an imino group-type methylated melamine-based compound, a methylol group-type melamine-based compound, a methylol group-type methylated melamine-based compound, a completely alkyl type methylated melamine-based compound, and the like. In particular, examples of a methylolated melamine-based compound include monomethylolmelamine, dimethylolmelamine, trimethylolmelamine, tetramethylolmelamine, pentamethylolmelamine, and hexamethylolmelamine. These may be used alone or in combination of plural kinds thereof as long as the scope of the present invention is satisfied.

Since the melamine-based compound is the material described above that is easily compatible with water, in a case where the coating composition contains the melamine-based compound, the content thereof is preferably 10 parts by mass or less, and particularly preferably 5 parts by mass or less with respect to 100 parts by mass of the binder resin (A). When the content of the melamine-based compound is 10 parts by mass or less with respect to 100 parts by mass of the binder resin (A), the coatability of the water-based coating material is improved.

<Method for Preparing Coating Composition>

In a case where the coating composition is prepared, a solvent or a dispersion medium (hereinafter, collectively referred to as a solvent) may be contained. That is, various components may dissolve or be dispersed in a solvent to form a coating composition, and the coating composition may be applied to the polyester base material. In a case where such a method is adopted, a laminated polyester film in which the easy-adhesion layer (X) is laminated on the polyester base material can be obtained by drying and heating the solvent after application.

In the laminated polyester film of the present invention, it is preferable to use a water-based solvent (C) as a solvent. Here, the water-based solvent (C) refers to water, or a mixture of water and a water-soluble organic solvent such as an alcohol such as methanol, ethanol, isopropyl alcohol or butanol, a ketone such as acetone or methyl ethyl ketone, or a glycol such as ethylene glycol, diethylene glycol or propylene glycol in an arbitrary ratio. This is because, by using the water-based solvent, rapid evaporation of the solvent in the heating step can be suppressed, and not only a further uniform easy-adhesion layer (X) can be formed, but also it is excellent in terms of environmental impact.

In the present invention, a preferred coating composition for forming the easy-adhesion layer (X) can be prepared by mixing and stirring the binder resin (A), the reactive compound (B), which are water-dispersed or water-soluble as necessary, and the water-based solvent (C), in any order at a desired mass ratio. Next, if necessary, various additives such as an easy sliding agent, inorganic particles, organic particles, a surfactant, an antioxidant, and a thermal initiator can be mixed and stirred in any order to the extent that the characteristics of the easy-adhesion layer (X) provided by the coating composition are not deteriorated. As a method of mixing and stirring, a method of shaking a container by hand, a method of stirring with a magnetic stirrer or a stirring blade, and a method using ultrasonic irradiation, vibration dispersion, or the like can be used.

Examples of the particles to be used include inorganic particles such as colloidal silica, titanium oxide, aluminum oxide, zirconium oxide, calcium carbonate, carbon black, and zeolite particles, and organic particles such as acrylic particles, silicone particles, polyimide particles, "Teflon" (registered trademark) particles, crosslinked polyester particles, crosslinked polystyrene particles, crosslinked polymer particles, and core-shell particles, and these may be used alone or in combination of plural kinds thereof. Among these, inorganic particles are preferable, and colloidal silica is more preferable from the viewpoints of hardness for obtaining an effect of suppressing blocking and heat properties in a preferred method for producing a laminated polyester film. When the colloidal silica is used as the inorganic particles, the inorganic particles are well dispersed in the easy-adhesion layer (X), and the roughness average Ra of the easy-adhesion layer (X) can be easily set to 20 nm or less. As the colloidal silica, for example, "Snowtex" (registered trademark)" Series manufactured by NISSAN CHEMICAL INDUSTRIES, LTD. and "Cataloid (registered trademark)" Series manufactured by JGC Catalysts and Chemicals Ltd. can be suitably used.

A number average particle diameter of these particles is preferably in a range of 30 nm or more and 1000 nm or less. Here, the number average particle diameter is a value (number average) obtained by adding particle sizes of primary particles defined as particles generated by growth of a single crystal nucleus in JIS H 7008 (2002) and dividing the sum by the number. The number average particle diameter of the particles is more preferably in a range of 80 nm or more and 450 nm or less, and still more preferably in a range of 100 nm or more and 300 nm or less. As the particles, monodisperse particles may be used, and aggregated particles in which a plurality of particles are aggregated may also be used. In addition, in some cases, a plurality of kinds of particles having different number average particle diameters may be used in combination. The number average particle diameter of the particles can be measured by a particle size distribution analysis using a dynamic light scattering method in the form of a coating composition, and by a shape analysis using SEM-EDX in the form of a laminated polyester film.

Specifically, in the present invention, a preferable coating composition for forming the easy-adhesion layer (X) contains at least two kinds of resins or compounds selected from a polyester resin, an oxazoline compound, and a carbodiimide compound. By satisfying the above combination, $\gamma h/\gamma d$ of the easy-adhesion layer (X) to be formed and/or the advancing angle $\theta a$ of water and the receding angle $\theta r$ of water can be easily controlled within the above ranges, and the coatability and adhesiveness of the water-based coating material are improved.

<Method for Producing Laminated Polyester Film>

A method for forming the easy-adhesion layer (X) of the present invention is preferably a method of obtaining the easy-adhesion layer by a step of applying and heating the preferable coating composition described above to and on at least one surface of the polyester base material to form the easy-adhesion layer (X). In this forming method, the coating composition may contain, for example, various binder resins (A) such as a polyester resin, a urethane resin, and an acrylic resin, at least one or more kinds of the compounds (B) selected from a melamine-based compound, an oxazoline compound, and a carbodiimide compound, and various additives such as a crosslinking catalyst, an easy sliding agent, inorganic particles, organic particles, a surfactant, an antioxidant, and a thermal initiator.

As a method for applying the coating composition to the polyester base material, either an in-line coating method or an off-coating method can be used, but the in-line coating method is preferable. The in-line coating method is a method in which a coating composition is applied in a step for producing a polyester base material (polyester film). Specifically, the method refers to a method in which a polyester resin is applied at any stage from melt extrusion to heat treatment and winding up after biaxial stretching, and usually, it is applied to any film of a non-stretched (unoriented) polyester film in a substantially amorphous state, obtained by melt extrusion and quenching thereafter (hereinafter, may be referred to as a film A), an uniaxially stretched (uniaxially oriented) polyester film stretched in a longitudinal direction thereafter (hereinafter, may be referred to as a film B), or a biaxially stretched (biaxially oriented) polyester film before heat treatment, which has been further stretched in a width direction (hereinafter, may be referred to as a film C).

In the present invention, it is preferable to adopt a method of providing the easy-adhesion layer (X) by applying a coating composition to any of the film A and the film B of the polyester film before completion of crystal orientation, evaporating a solvent, and then stretching the polyester film uniaxially or biaxially, and heat-treating the film to complete crystal orientation of the polyester film. According to the method, a film formation of a polyester film (corresponding to the polyester base material of the laminated polyester film of the present invention), application of a coating composition and drying of a solvent, and heating (that is, formation of the easy-adhesion layer (X)) can be performed in a continuous process. In particular, in a case where the application is performed to the film B, a heat treatment step (heat fixation) after stretching in a polyester film width direction, drying of the coating composition, and heating (that is, formation of the easy-adhesion layer (X) by heat curing) can be performed in the same step. Therefore, not only there is an advantage in terms of production cost, but also by completing the crystal orientation of the polyester base material after drying, the coating layer can be subjected to a high-temperature heat treatment while reducing the deformation and thermal shrinkage of the base material. As a result, crosslinking of the easy-adhesion layer (X) formed by application is promoted, and application unevenness due to permeation hardly occurs when a water-based functional material is applied. Furthermore, it is also an advantage that it is easy to more uniformly thin the thickness of the easy-adhesion layer (X) in order to perform stretching after application.

In the heat treatment (heat curing) to be performed on the coating layer, there are preferable temperature conditions from the viewpoint of sufficiently proceeding the crosslinking reaction of the easy-adhesion layer (X) to suppress permeation of the water-based coating material. Specifically, it is preferable to form the easy-adhesion layer (X) by heat curing at a heat treatment temperature of 170°C or higher, and the heat curing temperature is more preferably 180°C or higher, still more preferably 200°C or higher, and particularly preferably 230°C or higher. An upper limit of the heat treatment temperature is preferably 260°C from the heat resistance temperature of the polyester film. When the heat treatment temperature is 260°C or lower, deformation of the polyester film is suppressed, and a more uniform laminated polyester film is prone to be obtained.

Among these, a method of applying the coating composition to a film (film B) which has been uniaxially stretched in the longitudinal direction, drying a solvent, and then stretching the film in the width direction, and heating the film is excellent. This is because, in this method, the number of stretching steps that the layer formed by the coating composition undergoes is smaller by one time as compared with a method of applying the coating composition to a non-stretched film and then performing biaxial stretching, thus defects and cracks of the easy-adhesion layer (X) due to stretching hardly occur, and the easy-adhesion layer (X) having excellent transparency and smoothness can be formed.

On the other hand, an off-line coating method is a method in which a coating composition is applied to a film after the film A is uniaxially or biaxially stretched and subjected to a heat treatment to complete the crystal orientation of the polyester film or to the film A itself in a step different from the film formation step of the film. In the present invention, from the various advantages described above, it is preferable to use the in-line coating method, but even in a case where the easy-adhesion layer (X) is formed by the off-line coating method, the processing temperature is preferably 170°C or higher, more preferably 180°C or higher, and still more preferably 200°C or higher. When the processing temperature is 170°C or higher, the crosslinking reaction can proceed to sufficiently cure the easy-adhesion layer (X) of a thin film.

In particular, from the viewpoint of sufficiently proceeding the crosslinking reaction of the easy-adhesion layer (X) described above to suppress the permeation of the water-based coating material, even in a case where the same method is used, $\gamma h/\gamma d$ and the receding angle $\theta r$ of water may not be controlled within the above ranges unless the processing temperature is set to 170°C or higher. An upper limit of the processing temperature is preferably 260°C from the heat-resistant temperature of the polyester film. When the processing temperature is 260°C or lower, deformation of the polyester film is suppressed, and a uniform laminated polyester film is prone to be obtained.

Here, as the application method of the coating composition to the polyester film, any known application method, for example, any method selected from a bar coating method, a reverse coating method, a gravure coating method, a die coating method, a blade coating method, or the like can be used along with the in-line coating method and the off-line coating method.

Therefore, a preferred method for forming the easy-adhesion layer (X) in the present invention is a method of applying the coating composition using a water-based solvent on a polyester base material by an in-line coating method, drying and heat-treating the coating composition to form the easy-adhesion layer. More preferably, it is a method of in-line coating the film B with the coating composition after uniaxial stretching. In the method for producing the laminated polyester film of the present invention, the drying is preferably carried out in a temperature range of 80 to 130°C in order to complete removal of the solvent of the coating composition. In addition, the heat treatment is preferably carried out in a temperature range of 170 to 260°C in order to complete the crystal orientation of the polyester film and heat curing of the coating composition to complete formation of the easy-adhesion layer (X).

Next, the method for producing the laminated polyester film of the present invention will be described more specifically by taking, as an example, a case where a polyethylene terephthalate (hereinafter, PET) film is used as the polyester base material, but the laminated polyester film of the present invention and the method for producing the same are not limited thereto.

First, PET pellets are sufficiently vacuum dried, then supplied to an extruder, melt-extruded into a sheet shape at about 260°C to 280°C, and cooled and solidified to prepare a non-stretched (unoriented) PET film (film A). (In this case, a sheet-like material melt-extruded into a sheet shape is preferably cooled and solidified by a cast drum at a temperature of 10°C to 40°C.) The non-stretched PET film is stretched by 2.5 to 5.0 times in the longitudinal direction with a roll heated to 80°C to 120°C to obtain an uniaxially oriented PET film (film B). Furthermore, the above-described coating composition prepared to have a predetermined concentration is applied to one side of the film B.

In this case, the coating surface of the uniaxially oriented PET film may be subjected to a surface treatment such as a corona discharge treatment before applying the coating composition. By performing the surface treatment such as the corona discharge treatment, wettability of the coating composition to the uniaxially oriented PET film is improved, thus crawling of the coating composition is prevented, and the easy-adhesion layer (X) having a more uniform coating thickness can be formed. After application of the coating composition, ends of the uniaxially oriented PET film are gripped with clips and a solvent of the coating composition is dried in a heat treatment zone (preheating zone) at 80 to 130°C. In particular, when the uniaxially oriented PET film to which the coating composition has been applied is send to the heat treatment zone, it is preferable that uncoated portions at both ends of the uniaxially oriented PET film in the width direction are gripped by clips and guided to a tenter. After drying, the film is stretched 1.1 to 5.0 times in the width direction, subsequently led to a heat treatment zone (heat fixation zone) at 170°C to 260°C, and subjected to a heat treatment for 1 to 30 seconds to complete the crystal orientation.

In this heat treatment step (heat fixation step), a relaxation treatment of 3% to 15% in the width direction or the longitudinal direction may be performed, as necessary. Thereafter, the laminated polyester film is cooled to room temperature, and the laminated polyester film is cut in parallel with the longitudinal direction with a known laser blade or the like, so that the uncoated portions at both ends in the width direction gripped by the clips are removed, and then the film can be wound into a roll. The laminated polyester film thus obtained is a laminated polyester film excellent in transparency, coatability and adhesiveness of a water-based coating material. A film of the uncoated portion at both ends in the width direction cut and removed by the slitter can be used as recycling materials to be described later.

In the laminated polyester film of the present invention, an intermediate layer may be provided between the easy-adhesion layer (X) and the polyester base material, but in the case of providing the intermediate layer, the film may be scratched at the time of winding the film laminated with the intermediate layer, or in steps until providing the easy-adhesion layer (X) of the present invention thereafter. Therefore, in the present invention, it is preferable that the easy-adhesion layer (X) and the polyester base material are directly laminated.

In the polyester base material forming the laminated polyester film of the present invention, a layer constitution is not limited, and examples thereof include constitutions such as a single-layer constitution consisting of only layer A, a laminated constitution of layer A/layer B, that is, a two-kind two-layer laminated constitution, a laminated constitution of layer A/layer B/layer A, that is, a two-kind three-layer laminated constitution, and a laminated constitution of layer A/layer B/layer C, that is, a three-kind three-layer laminated constitution.

A lamination method in the polyester base material constituting the laminated polyester film of the present invention is not limited, and examples thereof include a lamination method by a coextrusion method, a lamination method by lamination, and a combination method thereof. From the viewpoint of transparency and production stability, it is preferable to adopt the coextrusion method. In the case of forming into a laminate, a different resin constitution may be used for the purpose of imparting different functions to respective layers. For example, in the case of a laminated constitution of layer A/layer B/layer A, that is, a two-kind three-layer laminated constitution, examples thereof include a method of constituting the layer B by homopolyethylene terephthalate from the viewpoint of transparency, and adding particles to the layer A for providing lubricity, and the like.

<Materials derived from Biomass and Recycling Materials>

In the laminated polyester film of the present invention, the polyester base material preferably contains at least one of materials derived from biomass and recycling materials from the viewpoint of reducing the environmental impact. Here, the biomass is an organic compound obtained by photosynthesis from carbon dioxide and water. When biomass is burned, the biomass usually becomes to carbon dioxide and water again, so that biomass can be used as so-called carbon neutral renewable energy.

When a proportion of the number of carbon atoms derived from plants to a total number of carbon atoms is taken as a biomass degree, for example, in an ethylene terephthalate unit, when only the ethylene glycol component is all derived from plants, the biomass degree is theoretically 20%. In order to increase the biomass degree more than that, terephthalic acid also needs to be derived from plants, and an effect of reducing the environmental impact increases, but the production cost increases. As the ethylene glycol component and the terephthalic acid component, a petroleum-derived component and a plant-derived component may be used in combination. A lower limit of the biomass degree of the polyester constituting the film is preferably 5%, more preferably 10%, and still more preferably 13% from the viewpoint of exhibiting the effect of reducing the environmental impact. When the biomass degree is 5% or more, the effect of reducing the environmental impact can be expected. On the other hand, an upper limit of the biomass degree is preferably as high as possible in a case where only reducing the environmental impact is considered, and the upper limit is 100%. From the viewpoint of achieving both production cost and reducing the environmental impact, it is practically preferable that the biomass degree is 20% or less.

Examples of a known method for analyzing the presence or absence of materials derived from biomass include a method using a carbon isotope ($^{14}$C) described on the homepage (http://www.jbpaweb.net/bp/) of Japan Bioplastic Association.

The recycling materials are raw materials obtained by recovering and decomposing a polyester produced as a chemical product once or a plurality of times and reusing the polyester. Examples of the recycling materials in the laminated polyester film of the present invention can include uncoated portions at both ends in the width direction cut and removed in the step for producing the laminated polyester film of the present invention, a recovered product of another polyester film, and polyester distributed in a form different from a film like a PET bottle. When the laminated polyester film is formed, the recycling materials are preferably used in an amount of 90 mass% or less in 100 mass% of the polyester raw material. By suppressing the use of the recycling materials to 90 mass% or less, the amount of the polyester having high crystallinity once formed into a chemical product can be suppressed, so that decrease in the thermal characteristics and transparency, and coloring of the resulting laminated polyester film can be reduced.

<Laminate, Processed Layer (Y)>

A laminate of the present invention will be described below. The laminate of the present invention includes a processed layer (Y) on a surface of the easy-adhesion layer (X) of the laminated polyester film of the present invention. That is, the laminated polyester film of the present invention is preferably used for producing a laminate in which the processed layer (Y) is further formed on the easy-adhesion layer (X). In addition, it is preferable to use a wet coating method for forming the processed layer (Y), and the coating material for forming the processed layer (Y) is preferably an "water-based coating material" containing water as a main solvent or a dispersion medium. Here, using water as the main solvent or dispersion medium means that a proportion of water is more than 50 mass% in 100 mass% of materials constituting the solvent or dispersion medium. As a method forming the processed layer (Y), any known application method, for example, any method selected from a bar coating method, a reverse coating method, a gravure coating method, a die coating method, a blade coating method, or the like can be used.

In addition, the processed layer (Y) is preferably a functionalizing layer that imparts different physical characteristics to the polyester film. Examples of the function to be imparted include functions such as scratch prevention, conduction and antistatic properties, imparting sticky adhesiveness, preventing adhesion of dirt and the like, transmission and absorption of various types of infrared, visible, and ultraviolet rays, and easy peeling that can be used for protection and transfer processing of an adherend. In particular, in the laminate of the present invention, it is particularly preferable that the processed layer (Y) contains at least one of a hard coating material, an adhesive material, and a printing ink, for example, as an application of a laminated polyester film having adhesiveness and transparency.

On the other hand, it is still more preferable that the processed layer (Y) contains the dispersant (D). By containing the dispersant (D), it is possible to improve the uniformity of application from the viewpoint of dispersing various compositions that achieve the above-described functionalizing in water which is a main solvent, and when the processed layer (Y) is formed by a wet coating method. Details of the dispersant (D) will be described later.

In the laminate of the present invention, a water content ratio of the processed layer (Y) is preferably 50 wt ppm or more. When the water content ratio of the processed layer (Y) is 50 wt ppm or more, the dispersant (D) to be described later is present in a state of being uniformly dispersed in the processed layer (Y), so that the processed layer (Y) can favorably exhibit various functions to be described later. On the other hand, the fact that the water content ratio of the processed layer (Y) is less than 50 wt ppm means that functional components are in a state of being aggregated in the formation of the processed layer (Y) by the wet coating method, and in such a case, the processed layer (Y) may not satisfactorily exhibit various functions.

Examples of a method for setting the water content ratio of the processed layer (Y) to 50 wt ppm or more include a method using a "water-based coating agent" as a coating agent for forming the processed layer (Y). By using the water-based coating agent, the environmental impact at the time of forming the processed layer can be reduced.

<Dispersant (D)>

It is preferable that the processed layer (Y) contains the dispersant (D) from the viewpoint of uniformly dispersing various compositions that achieve the above-described functionalizing. That is, the water-based coating material for forming the processed layer (Y) preferably contains the dispersant (D). The dispersant (D) is a material that assists the dissolution or dispersion of various compositions that achieve the above-described functionalizing in water which is a main solvent or a dispersion medium. Examples of the dispersant (D) include a nonionic surfactant, an anionic surfactant, a cationic surfactant, an amphoteric surfactant, and other emulsifying dispersants, and these may be used alone or may be used in combination of two or more kinds thereof.

Examples of the nonionic surfactant include (poly)alkylene oxide (AO) addition-type nonionic surfactants and polyhydric alcohol-type nonionic surfactants. Examples of the AO addition-type include a (poly)ethylene oxide (EO) adduct of an aliphatic alcohol having 10 to 20 carbon atoms, an EO adduct of phenol, an EO adduct of nonylphenol, an EO adduct of an alkylamine having 8 to 22 carbon atoms, an EO adduct of poly(oxypropylene)glycol, and the like, and examples of the polyhydric alcohol type include a fatty acid (having 8 to 24 carbon atoms) ester of a polyhydric (tri- to octa-hydric or higher) alcohol (having 2 to 30 carbon atoms) (for example, glycerin monostearate, glycerin monooleate, sorbitan monolaurate, and sorbitan monooleate), an alkyl (having 4 to 24 carbon atoms) poly (polymerization degree of 1 to 10) glycoside, and the like.

Examples of the anionic surfactant include ether carboxylic acid having a hydrocarbon group having 8 to 24 carbon atoms or a salt thereof [sodium lauryl ether acetate, (poly)oxyethylene (addition mole number of 1 to 100) sodium lauryl ether acetate, and the like]; sulfuric acid ester having a hydrocarbon group having 8 to 24 carbon atoms, ether sulfuric acid ester, or a salt thereof [sodium lauryl sulfate, sodium (poly)oxyethylene (addition mole number of 1 to 100) lauryl sulfate, triethanolamine (poly)oxyethylene (addition mole number of 1 to 100) lauryl sulfate, sodium (poly)oxyethylene (addition mole number of 1 to 100) coconut oil fatty acid monoethanolamide sulfate, and the like]; sulfonate having a hydrocarbon group having 8 to 24 carbon atoms [sodium dodecylbenzenesulfonate and the like]; sulfosuccinate having 1 or 2 hydrocarbon groups having 8 to 24 carbon atoms; phosphoric acid ester having a hydrocarbon group having 8 to 24 carbon atoms, ether phosphoric acid ester, or a salt thereof [sodium lauryl phosphate, (poly)oxyethylene (addition mole number of 1 to 100) sodium lauryl ether phosphate, and the like]; fatty acid salt having a hydrocarbon group with 8 to 24 carbon atoms [sodium laurate, triethanolamine laurate, and the like]; and acylated amino acid salt having a hydrocarbon group having 8 to 24 carbon atoms [sodium methyl taurine coconut oil fatty acid, sodium sarcosine coconut oil fatty acid, sarcosine triethanolamine coconut oil fatty acid, triethanolamine N-coconut oil fatty acyl-L-glutamic acid, sodium N-coconut oil fatty acyl-L-glutamic acid, sodium lauroyl methyl-$\beta$-alanine, and the like].

Examples of the cationic surfactant include a quaternary ammonium salt type [stearyltrimethylammonium chloride, behenyltrimethylammonium chloride, distearyldimethylammonium chloride, ethylsulfate lanolin fatty acid aminopropylethyldimethylammonium, and the like] and an amine salt type [stearic acid diethylaminoethylamide lactate, dilaurylamine hydrochloride, oleylamine lactate, and the like].

Examples of the amphoteric surfactant include betaine-type amphoteric surfactants [coconut oil fatty acid amidopropyl dimethylaminoacetic acid betaine, lauryl dimethylaminoacetic acid betaine, 2-alkyl-N-carboxymethyl-N-hydroxyethylimidazolinium betaine, lauryl hydroxysulfobetaine, sodium lauroylamide ethyl hydroxyethyl carboxymethyl betaine hydroxypropyl phosphate, and the like] and amino acid-type amphoteric surfactants [sodium $\beta$-laurylaminopropionate and the like].

Examples of other emulsifying dispersants include polyvinyl alcohol, starch, and derivatives thereof, cellulose derivatives such as carboxymethyl cellulose, methyl cellulose, and hydroxyethyl cellulose, carboxyl group-containing (co)polymers such as sodium polyacrylate, and emulsifying dispersants having a urethane group or an ester group [for example, polycaprolactone polyol and polyether diol linked with polyisocyanate] described in U.S. Patent No. 5906704.

Regarding the presence or absence of the dispersant (D), it is difficult to completely remove the dispersant even from a laminate in addition to the coating material, and it can be confirmed by combining a nuclear magnetic resonance method (NMR), a gas chromatography-mass spectrometry combined method (GC-MS), and a Fourier transformation infrared spectroscopy (FT-IR), which are known organic substance identification methods.

EXAMPLES

Next, the present invention will be more specifically described based on Examples, but is not necessarily limited thereto. A method for measuring each characteristic and a method for evaluating each effect in the present invention are as follows.

[Method for Measuring Characteristic and Method for Evaluating Effect]

(1) Surface Energy of Easy-adhesion Layer (X)

First, the laminated polyester film was allowed to stand in an atmosphere at a room temperature of 23°C and a relative humidity of 65% for 24 hours. Thereafter, under the same atmosphere, a contact angle of each of the four kinds of liquids of pure water, ethylene glycol, formamide, and diiodomethane, with respect to the easy-adhesion layer (X) (resin layer) was measured at five points by a contact angle meter DM-501 (manufactured by Kyowa Interface Science Co., Ltd.), and an average value of the measured values was taken as the contact angle of each liquid. Next, using the obtained contact angles of the four kinds of liquids, the surface free energy ($\gamma$) of a solid was separated into three components of a dispersive force component ($\gamma_s^d$), a polar force component ($\gamma_s^p$), and hydrogen bonds component ($\gamma_s^h$) by a geometric mean method based on "a formula (extended Fowkes formula) obtained by extending the Fowkes formula" proposed by Hata et al., and the dispersive force, the polar force, the hydrogen bonds, and the surface energy, which is the sum of the dispersive force and the polar force of the present invention was calculated. Hereinafter, a specific calculation method will be described. The meaning of each symbol will be described below.

$\gamma_S^L$: Surface energy of resin layer and known solution described in Table 1

$\gamma_S$: Surface energy of resin layer

$\gamma_L$: Surface energy of known solutions described in Table 1

$\gamma_S^d$: Dispersive force component of surface energy of resin layer

$\gamma_S^p$: Polar force component of surface energy of resin layer

$\gamma_S^h$: Hydrogen bonds component of surface energy of resin layer

$\gamma_L^d$: Dispersive force component of surface energy of known solutions described in Table 1

$\gamma_L^p$: Polar force component of surface energy of known solutions as described in Table 1

$\gamma_L^h$: Hydrogen bonds component of surface energy of known solutions described in Table 1

Here, when $\gamma_S^L$ is a tension at an interface between the solid and the liquid, Equation (1) is established.

$$\gamma_{SL} = \gamma_S + \gamma_L - 2\,(\gamma_{Sd} \cdot \gamma_{Ld})^{1/2} - 2\,(\gamma_{Sp} \cdot \gamma_{Lp})^{1/2} - 2\,(\gamma_{Sh} \cdot \gamma_{Lh})^{1/2} \qquad \text{Equation (1)}$$

In addition, a state when a smooth solid surface and a droplet are in contact with each other at a contact angle ($\theta$) is expressed by the following Equation (2) (Young's formula).

$$\gamma_S = \gamma_S^L + \gamma_L \cos\theta \ \ldots \ \text{Equation (2)}$$

By combining these Equations (1) and (2), the following Equation is obtained.

$$(\gamma_S^d \cdot \gamma_L^d)^{1/2} + (\gamma_S^p \cdot \gamma_L^p)^{1/2} + (\gamma_S^h \cdot \gamma_L^h)^{1/2} = \gamma_L (1+\cos\theta)/2 \ \ldots$$

$$\text{Equation (3)}$$

[Table 1]

| | Constant (dyne/cm = mN/m) | | | |
|---|---|---|---|---|
| | Dispersive force component $Y_L^d$ | Polar force component $Y_L^p$ | Hydrogen bonds component $Y_L^h$ | Surface energy $Y_L$ |
| Pure water | 10.8 | 22.7 | 38.5 | 72.0 |
| Ethylene glycol | 17.5 | 4.7 | 26.0 | 48.2 |
| Formamide | 18.1 | 26.3 | 13.9 | 58.3 |
| Diiodomethane | 43.7 | 1.3 | 2.7 | 47.7 |

In practice, the contact angle ($\theta$) and each component ($\gamma_L^d$, $\gamma_L^p$, and $\gamma_L^h$) of the surface tension of the known liquid described in Table 1 were substituted into Equation (3) for four kinds of liquids of water, ethylene glycol, formamide, and diiodomethane, and four simultaneous equations were solved. As a result, surface energy ($\gamma$), a dispersive force component ($\gamma_S^d$), a polar force component ($\gamma_S^p$), and a hydrogen bonds component ($\gamma_S^h$) of the solid were calculated as solutions of the simultaneous equations. The dispersive force $\gamma d$ of the present invention corresponds to the dispersive force component ($\gamma_S^d$), and the hydrogen bonds $\gamma h$ corresponds to the hydrogen bonds component ($\gamma_S^h$), and the ratio $\gamma h/\gamma d$ of both was calculated as a control factor of wettability.

(2) Measurement of Water Advancing Angle and Water Receding Angle of Easy-Adhesion Layer (X)

The advancing angle $\theta a$ and the receding angle $\theta r$ of water in the easy-adhesion layer (X) were measured by an expansion-contraction method. A contact angle Drop Master DM-501 manufactured by Kyowa Interface Science Co., Ltd. was used as a measuring apparatus, and a measurement method was in accordance with the expansion-contraction method measurement manual of the same apparatus.

As for the advancing angle θa, droplets were continuously supplied to the easy-adhesion layer (X) at a liquid ejection speed of 2.0 μL/sec and a final droplet amount of 50 μL, and a shape of the expansion process of the droplets was imaged from before the start of ejection to after the end of ejection to obtain each contact angle. Although imaging is performed for a certain period of time before the start of the supply and after the end of the supply, imaging data before the start of the supply and after the end of the supply are excluded from the data of five points for calculating the contact angle in the analysis software. Since the contact angle in the expansion process of the droplet first changes with expansion and then shows a behavior of being almost constant, the contact angles were arranged in the expansion direction of the droplet, and when five consecutive points were selected in that order, an average value when the standard deviation of the five consecutive points first became 1° or less was taken as the advancing angle of the measurement. This measurement was performed five times in the same manner, and an average value thereof was taken as the advancing angle θa of water of the sample.

On the other hand, as for the receding angle θr, droplets were continuously sucked at an initial droplet amount of 50 μL and a liquid ejection speed of 2.0 μL/sec, and the shape of the droplet in the reduction process was imaged from before the start of ejection to after the end of ejection to obtain each contact angle. Although imaging is performed for a certain period of time before the start of the suction and after the end of the suction, imaging data before the start of the suction and after the end of the suction are excluded from the data of five points for calculating the contact angle in the analysis software. Since the contact angle in the contraction process of the droplet first changes with contraction and then shows a behavior of being almost constant, the contact angles were arranged in the contraction direction of the droplet, and when five consecutive points were selected in that order, an average value when the standard deviation of the five consecutive points first became 1° or less was taken as the receding angle of the measurement. This measurement was performed five times in the same manner, and an average value thereof was taken as the receding angle θr of water of the sample.

(3) Film Thickness of Easy-Adhesion Layer (X)

The thickness of the easy-adhesion layer (X) (resin layer) on the polyester base material was measured by observing a cross section using a transmission electron microscope (TEM). The thickness of the resin layer was read from an image imaged at a magnification of 200,000 times by TEM. The film thicknesses of a resin layer at 20 points in total were measured, and an average value thereof was taken as the film thickness of the easy-adhesion layer (X).

(4) Measurement of Elastic Modulus by Atomic Force Microscope (AFM)

The elastic modulus of the surface of the resin layer was measured in PeakForceQNM mode using AFM (Dimension Icon manufactured by Burker Corporation). From the obtained force curve, analysis based on the JKR contact theory was performed using the attached analysis software "NanoScopeAnalysis V1.40" to determine the elastic modulus distribution. Specifically, first, the laminated polyester film was fixed to a sample stage using a double-sided tape such that the measurement surface (easy-adhesion layer (X) surface) of the laminated polyester film was on an upper surface. Next, after configuration of warpage sensitivity, spring constant and tip curvature of a cantilever in accordance with a PeakForce QNM mode manual, measurement was performed under the following conditions, and the obtained DMT Modulus channel data was adopted as the elastic modulus of a resin layer. The measurement conditions are shown below.

Measuring apparatus: Atomic force microscope (AFM) (model number Dimension Icon) manufactured by Burker Corporation
Measurement mode: PeakForce QNM (force curve method)
Cantilever: RTESPA-300 manufactured by Bruker AXS GmbH.
Measurement atmosphere: 23°C, in air
Measurement range: 5 (um) square
Resolution: 512 × 512
Measurement speed: 0.977 Hz
Cantilever movement speed: 10 (um/s)
Indentation load (Setpoint): 40 (nN)
Poisson's ratio: 0.4.

Next, the obtained DMT Modulus channel data was analyzed with the analysis software "NanoScopeAnalysis V1.40", and a value of Image Raw Mean of the Results tab, which was obtained by processing in "Roughness" was set as the elastic modulus of the easy-adhesion layer (X).

(5) Measurement of total light transmittance and haze

Five (5) laminated polyester film samples each having a square shape of 5 cm on each side were prepared. Next, the sample was allowed to stand in a normal state (23°C, relative humidity 50%) for 40 hours. Measuring of the total light transmittance and the haze was performed in accordance with JIS "Method for Determining Haze of Transparent Material" (K 7136, 2000 edition) using a turbidimeter "NDH 5000" manufactured by Nippon Denshoku Industries Co., Ltd for each sample. The total light transmittance and haze values of each of the five points (5 points) were averaged to determine the total light transmittance and the haze value of the laminated polyester film.

(6) Application of Water-based Coating Material

Nonvolatile components as water-based UV curable hard coat components were adjusted as follows.

- Aqueous UV curable resin WBR-8519D manufactured by Taisei Fine Chemical Co., Ltd.: 97 parts by mass
- Photoinitiator "OMNIRAD" (registered trademark) 819DW from IGM Resin B.V.: 3 parts by mass

Further, pure water as a dispersion medium and a fluorine-based surfactant "plus coat" (registered trademark) RY-2 manufactured by GOO CHEMICAL CO., LTD.) as a surfactant were mixed with the water-based UV curable hard coat component in an amount of 0.1% of the total coating material to obtain a water-based UV curable hard coat coating material. The obtained water-based UV curable hard coat coating material was applied to the surface of the easy-adhesion layer (X) of the laminated polyester film by a wire bar coating method so as to have a thickness of about 1 um, dried at 120°C for 1 minute, and then irradiated with UV using an ultraviolet lamp having an irradiation intensity of 120 W/cm under conditions of an irradiation distance (distance between the lamp and an application surface of the water-based coating material) of 12 cm, a conveyor speed of 2 m/min, and an integrated intensity of about 300 mJ/cm$^2$ to be cured. As a method for setting the thickness of the hard coat layer (that is, the processed layer (Y)) to about 1 um, specifically, pure water was blended so that the nonvolatile content of the coating agent was 30 mass%, and the wire bar to be used for the wire bar coating method was selected for adjustment.

(7) Evaluation of Adhesiveness of Hard Coat <Cross-Cut Method>

In accordance with JIS 5600-5-6 (established in 1999), 25 squares of 5 × 5 were cut at a cut interval of 2 mm in the hard coat laminated polyester film sample obtained in (6). Next, 18 mm "Cellotape" (registered trademark) (product number: CT-18S, manufactured by Nichiban Co., Ltd.) was firmly rubbed and pressed against the cut portion with a finger so that the cut could be seen. Then, the "Cellotape" (registered trademark) was instantaneously peeled off at an angle of about 60° with respect to the hard coat layer. Thereafter, the number of squares in which the hard coat layer remained was counted. The number of evaluations was five, and the adhesiveness of the hard coat was evaluated with the average value (rounded up the decimal point) thereof. As evaluation criteria, a case where the proportion of the squares in which the hard coat layer remained was 90% or more was evaluated as favorable.

(8) Coatability of Water-based Coating Material (Interference Unevenness) (Application Appearance)

A hard coat laminated polyester film was obtained in the same manner as in (6). Next, samples having a size of 8 cm (width direction) × 10 cm (longitudinal direction) and 21 cm (width direction) × 30 cm (longitudinal direction) were cut out from the obtained hard coat laminated polyester film, and a black glossy tape (Vinyl tape No. 200-50-21: black manufactured by Yamato Corporation) was bonded to the opposite surface of the hard coat layer so as not to trap air bubbles. This sample was placed in a dark room 30 cm directly under a three-wavelength fluorescent lamp (manufactured by Panasonic Corporation, three-wavelength neutral white (F·L 15EX-N 15W)), and the degree of interference unevenness was visually observed while changing viewing angle, then the following evaluation was performed. B and above were evaluated as favorable.

A: An interval between the interference patterns was wider than B, or an interference pattern could not be visually recognized.
B: There were five or more striped interference patterns per 1 cm interval.
C: A non-applied portion was partially present.

(9) Thickness Unevenness of Processed Layer (Y)

A hard coat laminated polyester film was obtained in the same manner as in (6). Next, the thickness of the hard coat layer (processed layer (Y)) was measured by a spectroscopic interference method using a thickness measurement system "Filmetrics F20" (Filmetrics, INC) manufactured by Filmetrics. Specifically, 15 points were randomly measured from the sample piece of 8 cm × 10 cm with the back surface black tape bonded, prepared in (8), and the difference between the maximum value and the minimum value was defined as the thickness unevenness.

(10) Measurement of Roughness Average Ra and Ten-Point Average Roughness Rz of Easy-Adhesion Layer (X)

AFM measurement data was obtained in the same manner as in (4) Next, the obtained data of the Height Sensor channel was analyzed with analysis software "NanoScopeAnalysis V1.40", and the image obtained by processing in the XY direction and 3rd condition in the Flatten mode was subjected to the full range analysis in the Roughness mode, and Ra calculated was defined as the roughness average Ra of the easy-adhesion layer (X). On the other hand, the image in the Roughness mode was divided into five areas of 102 × 512 so as not to overlap each other, and a difference between MAX Peak Height (Rp) and Maximum Depth (Rv) in each range and an average value (Rzx) of five points were obtained. Furthermore, similarly, the image was divided into 5 areas of 512 × 102, and the obtained difference between Rp and Rv and the average value (Rzy) of 5 points were compared with the previous Rzx, and the larger one was defined as ten-point average roughness Rz.

(11) Blocking Resistance

A load of 6 kg/12 cm$^2$ was applied to a product (overlapping area: 3 cm × 4 cm) obtained by overlapping the easy-adhesion layer surface and the back surface of the film provided with the easy-adhesion layer (X), and the product was allowed to stand at 60°C and 95% RH for 150 hours, and then a peeling state of a site to which the load was applied was visually observed. Evaluation criteria were as follows, and A, B, and C were evaluated as favorable.

A: The film was easily peeled off, and no trace of overlapping was left.
B: Although the film was easily peeled off, traces of overlapping remained partially.
C: Peeling was possible, but traces of overlapping remained.
D: The film was cleaved when peeled off.

(12) Measurement of Water Content Ratio of Processed Layer (Y)

The water content ratio of the processed layer (Y) was quantified by heating evolved gas analysis method (TPD-MS method). A specific procedure is shown below. First, a laminate having the processed layer (Y) was obtained in the same manner as in (5). Then, the processed layer (Y) was scraped off from the laminate with a diamond file (#200) to obtain a powder of 100 mg in total. Subsequently, the heating device with a temperature controller and the mass spectrometer were directly connected, the above-described powder was set on a heating stage, and then helium gas was caused to pass through the heating stage for 15 minutes under the condition of 50 ml/min as a preliminary treatment. Furthermore, in a helium atmosphere, the temperature was raised with a temperature program: from room temperature to 300°C at 10°C/min, and the concentration of water generated from the laminate at the time of heating was analyzed and integrated to obtain the moisture content of the processed layer (Y). Furthermore, the water content ratio (wt ppm) was calculated by division by the sample mass. Further, the measuring apparatus and conditions are as follows.

Mass Spectrometer: GC/MS QP5050A manufactured by Shimadzu Corporation
MS sensitivity: Gain 1.40 kV
Mass number: m/z = 18 ($H_2O$)
Atmosphere: Helium flow (50 ml/min)
Sample mass: 100 mg.

(13) Analysis of Variation Range and Area of Domain using Elastic Modulus Variation Image

The elastic modulus image was measured in the same manner as in (4) except that the measurement range was set to 1 um square. The measurement conditions are shown below.

Measuring apparatus: Atomic force microscope (AFM) (model number Dimension Icon) manufactured by Burker Corporation
Measurement mode: PeakForce QNM (force curve method)
Cantilever: RTESPA-300 manufactured by Bruker AXS GmbH.
Measurement atmosphere: 23°C, in air

Measurement range: 1 ($\mu$m) square
Resolution: 512 $\times$ 512
Measurement speed: 0.977 Hz
Cantilever movement speed: 10 ($\mu$m/s)
Indentation load (Setpoint): 40 (nN)
Poisson's ratio: 0.4.

Next, the obtained data of the DMT Modulus channel was analyzed with analysis software "NanoScopeAnalysis V1.40". First, smoothing was performed by Order: 3rd in the Flatten mode to obtain an "elastic modulus variation image". Next, the "elastic modulus variation image" was analyzed in the Roughness mode, and Image Rmax was defined as a variation range.

On the other hand, for the analysis of the area of the domain, Color tabel: 7 was selected from Adjust Image Color Scale of the Commands tab for the "elastic modulus variation image", and the image was converted into a grayscale image (corresponding to the schematic diagrams illustrated in Figs. 1 and 2). Further, in the Bearing Analysis mode, the elastic modulus variation image was colored at a Bearing Area Percent: 10%. Next, a colored portion was selected from hues using Color Threshold of image processing software ImageJ/developer: National Institutes of Health (NIH). Furthermore, the average area of each domain was calculated by the Analize Particles (particle analysis) function. The area of the noise portion was excluded by setting the size range to 5-Infinity (Pixel^2) in the measurement condition setting of Analize Particles (particle analysis). The average area of each domain obtained by the above operation was adopted as the area of the domain.

[Resin]

First, the following resins were obtained in preparation of a coating composition.

(Reference Example 1) Resin 1

An aqueous dispersion of a polyester resin having the following copolymerization composition was obtained. The following copolymerization component and 0.1 parts of potassium titanium oxalate as a catalyst were added to a reactor, and a temperature was raised to 200°C while being stirred and mixed at normal pressure in a nitrogen atmosphere. Next, the reaction temperature was gradually raised to 250°C over 4 hours to complete the transesterification reaction. 15 parts by mass of the polyester resin thus obtained and 85 parts by mass of water were added to a dissolution tank and dispersed at a temperature of 80°C to 95°C over 2 hours under stirring to obtain a 15 mass% aqueous dispersion of the polyester resin. This was defined as a resin 1.

<Copolymerization Component>

(Dicarboxylic Acid Component)

Dimethyl 2,6-naphthalenedicarboxylate: 88 mol%
Dimethyl sodium 5-sulfoisophthalate: 12 mol%

(Diol Component)

Compound obtained by adding 2 mol of ethylene oxide to 1 mol of bisphenol S: 86 mol%
1,3-Propanediol: 14 mol%

(Reference Example 2) Resin 2

Under a nitrogen gas atmosphere and at normal temperature (25°C), 100 parts by mass of water, 1 part by mass of sodium lauryl sulfate, and 0.5 parts by mass of ammonium persulfate were charged into a container 1, and the temperature thereof was raised to 70°C to dissolve the sodium lauryl sulfate, thereby obtaining a solution 1 at 70°C. 30 parts by mass of water and 2 parts by mass of sodium lauryl sulfate were added to a container 2 at normal temperature (25°C) to dissolve the sodium lauryl sulfate, 13.3 parts by mass of polyethylene oxide monomethacrylate (repeating unit of ethylene oxide: 10) was then added thereto as an acrylic monomer component having a polyalkylene oxide, and 29.7 parts by mass of ethyl acrylate, 50.0 parts by mass of methyl methacrylate, and 5.0 parts by mass of N-methylol acrylamide were further added thereto as other monomer components, and the mixture was stirred to obtain a solution 2. Under a nitrogen gas atmosphere, the solution 1 was transferred to a reactor, and the solution 2 was continuously added dropwise to the solution 1 over 3 hours while the temperature of the solution in the reactor was maintained at 70°C. After completion of the dropwise addition, the mixture was further stirred at 85°C for 2 hours, then cooled to 25°C, and the reaction was terminated to obtain an emulsion of an acrylic resin. This was defined as a resin 2.

(Reference Example 3) Resin 3

Under a nitrogen gas atmosphere and at normal temperature (25°C), 66 parts by mass of a polyester-based urethane resin ("Hydran" (registered trademark) AP-40 (F) manufactured by DIC Corporation), 35 parts by mass of methyl methacrylate, 29 parts by mass of ethyl acrylate, and 2 parts by mass of N-methylol acrylamide were added in a container 3 to obtain a solution 3. Subsequently, 7 parts by mass of an emulsifier "Rear Soap" ER-30 manufactured by ADEKA Corporation was added, and water was further added so that the solid content of the solution was 50 mass%, thereby obtaining a solution 4. 30 parts by mass of water was added to a container 4 at normal temperature (25°C), and the temperature was raised to 60°C. Thereafter, the solution 4 was continuously added dropwise to the container 4 over 3 hours while being stirred. Furthermore, at the same time, 3 parts by mass of a 5 mass% aqueous potassium persulfate solution was continuously added dropwise to the container 4. After completion of the dropwise addition, the mixture was further stirred for 2 hours, then cooled to 25°C, and the reaction was terminated to obtain an aqueous dispersion of an acryl-urethane copolymer resin. This was defined as a resin 3.

(Reference Example 4) Resin 4

In the same manner as in Reference Example 1, an aqueous dispersion of a polyester resin (Tg 80°C) formed from terephthalic acid (88 mol%), 5-sodium sulfoisophthalic acid (12 mol%), ethylene glycol (95 mol%), and diethylene glycol (5 mol%) was obtained. This was defined as a resin 4.

(Reference Example 5) Resin 5

In the same manner as in Reference Example 1, an aqueous dispersion of a polyester resin 5 (Tg: 66°C) formed from terephthalic acid (99 mol%), 5-sodium sulfoisophthalic acid (1 mol%), ethylene glycol (70 mol%), and neopentyl glycol (30 mol%) was obtained. This was defined as a resin 5.

[Other Components]

In addition, the following materials were used as a reactive compound, a surfactant, and the like.

Reactive Compound 1: Carbodiimide water-based crosslinking agent ("Carbodilite" (registered trademark) V-04 manufactured by Nisshinbo Chemical Inc.)
Reactive Compound 2: Oxazoline-containing polymer water-based dispersion ("EPOCROS" (registered trademark) WS-500 manufactured by NIPPON SHOKUBAI CO., LTD.)
Reactive Compound 3: Melamine resin water sol ("WATERSOL" (registered trademark) S-695 manufactured by DIC Corporation)
Reactive Compound 4: Branched isocyanate compound "Elastolon" (registered trademark) E-37 manufactured by DKS Co. Ltd.
Surfactant: Fluorine-based surfactant ("plus coat" (registered trademark) RY-2 manufactured by GOO CHEMICAL CO., LTD.)
Inorganic Particles 1: Silica particles having a number average particle diameter of 170 nm ("Snowtex" (registered trademark) MP-2040 manufactured by NISSAN CHEMICAL INDUSTRIES, LTD.).
Inorganic Particles 2: Silica particles having a number average particle diameter of 100 nm ("Snowtex" (registered trademark) MP-1040 manufactured by NISSAN CHEMICAL INDUSTRIES, LTD.).
Inorganic Particles 3: Silica particles having a number average particle diameter of 1 um ("sicastar" (registered trademark) 43-00-103 manufactured by Micromod Partikeltechnologie GmbH).

In a film form, the number average molecular weight can be determined by analysis of particle image observed by a transmission electron microscope (TEM) method of a cross section, and in the coating composition, the number average molecular weight can be determined by number-based analysis of dynamic light scattering (DLS) method.

(Example 1)

<Coating Composition>

First, Resin 1:Reactive Compound 1:Reactive Compound 2 were mixed at 100:30:30 (mass ratio), and 0.5 parts by mass of the inorganic particles 1 were further added with respect to 100 parts by mass of the binder resin (Resin 1). Further, the concentration was adjusted with water as a solvent, and then 0.03 parts by mass of a surfactant was added to 100 parts by mass of the total of water to adjust the coatability. Here, a method of adjusting the concentration with water will be described in detail. Specifically, the concentration was determined by the following method according to the intended thickness of the easy-adhesion layer (X). The thickness of the easy-adhesion layer (X) is proportional to the concentration of the coating composition and the application thickness, and is inversely proportional to a draw ratio in the width direction and a specific gravity of the easy-adhesion layer (X). Among them, the coating thickness is uniquely determined from the count used for bar coating, and the stretch ratio is uniquely determined from the film formation conditions. Therefore, a plurality of concentrations of the coating composition were prepared in advance, a calibration curve was created by measuring the thickness of the easy-adhesion layer (X) by the above-described method, and the concentration of the coating composition matching the target thickness of the easy-adhesion layer (X) was determined. The obtained concentration of the coating composition was about 2.5 mass% to 4.5 mass%. Thus, a coating composition was obtained.

<Laminated Polyester Film>

PET pellets (limiting viscosity: 0.64 dl/g) containing two kinds of particles (4 mass% of silica particles having a primary particle diameter of 0.3 um and 2 mass% of calcium carbonate particles having a primary particle diameter of 0.8 um) were sufficiently vacuum-dried, then supplied to an extruder, melted at 280°C, extruded into a sheet from a T-shaped die, wound around a mirror-finished casting drum having a surface temperature of 25°C by an electrostatic application casting method, and cooled and solidified. The composition and particle size of the particles contained in the PET pellets were determined using a combination of shape analysis by TEM and elemental analysis by an energy dispersive X-ray spectroscopy (EDX), on thin film sections prepared using a cryomicrotome. On the other hand, the limiting viscosity is measured by an extrapolation method in which PET pellets dissolved in a dissolvable solvent (for example, hexafluoroisopropanol) in accordance with a method in JIS K 7367:2002, and viscosity measuring was performed at a plurality of concentrations, and then a viscosity of 100% (that is, the limiting viscosity) was calculated from an approximate curve.

The non-stretched film (film A) thus obtained was heated to 90°C and stretched 3.1 times in the longitudinal direction to obtain an uniaxially stretched film (film B). Subsequently, the uniaxially stretched film was subjected to a corona discharge treatment in air, and then the coating composition was applied by bar coating (wire bar #4). Subsequently, both ends in the width direction of the uniaxially stretched film coated with the coating composition were gripped with clips and led to a preheating zone. The ambient temperature in the preheating zone was 90°C to 100°C, and the solvent of the coating composition was dried. Subsequently, the film was continuously stretched 3.6 times in the width direction in a stretching zone at 100°C, and subjected to heat treatment in a heat treatment zone at 240°C for 20 seconds to form the easy-adhesion layer (X). Further, a 5% relaxation treatment was performed in the width direction at the same temperature to obtain a laminated polyester film in which the crystal orientation of the polyester film was completed. In the obtained laminated polyester film, the thickness of the PET film (polyester base material) was 50 um, and the thickness (film thickness) of the easy-adhesion layer (X) was 80 nm. The evaluation results are shown in Table 3.

(Examples 2 and 5 to 15, Comparative Examples 1, 2, and 4)

A laminated polyester film was obtained in the same manner as in Example 1 except that the composition and drying temperature (maximum processing temperature) of the coating composition were as shown in Table 2. In the obtained laminated polyester film, the thickness of the PET film (polyester base material) was 50 um, and other evaluation results are shown in Table 3.

(Example 3)

A coating composition of Example 1 was used, and a laminated polyester film was obtained by the following method. As a base material, PET film "Lumirror" (registered trademark) T60 (thickness 50 um) manufactured by Toray Industries, Inc. was used. The coating composition was applied to the base material using a wire bar, and then dried and cured in a hot air oven under conditions at 180°C for 2 min. In the obtained laminated polyester film, the thickness of the PET film (polyester base material) was 50 um, and other evaluation results are shown in Table 3.

(Example 4 and Comparative Example 3)

A laminated polyester film was obtained in the same manner as in Example 3 except that the drying temperature of the coating composition was changed. The evaluation results are shown in Table 3.

(Examples 16 and 17)

A laminated polyester film was obtained in the same manner as in Example 6 except that the recycling materials and the materials derived from biomass in proportions shown in Table 2 were used as the raw materials of the polyester base material. The evaluation results are shown in Table 3.

The recycling materials were prepared by shredding the uncoated portions at both ends in the width direction gripped by the clip in the tenter, which had been removed in the film forming steps of Examples 1, 2, and 5 to 15 and Comparative Examples 1, 2, and 4, and kneading the shredded portions with a virgin raw material. On the other hand, materials derived from biomass were prepared in the same manner as described above except that PET pellets (biomass degree: 15%) in which a part of ethylene glycol in starting raw materials was replaced with plant-derived monoethylene glycol were used.

# EP 4 403 360 A1

[Table 2-1]

| | Composition of water-based coating composition | | | | | | | | | | |
|---|---|---|---|---|---|---|---|---|---|---|---|
| | Binder resin (A) (Details of 100 parts by mass) | | | | Reactive compound (B) (Relative parts by mass with respect to total resin amount of 100) | | | | | | |
| Example 1 | Resin 1 (Polyester) | 100 | | | Reactive Compound 1 (Carbodiimide compound) | 30 | Reactive Compound 2 (Oxazoline compound) | 30 | | |
| Example 2 | Resin 1 (Polyester) | 100 | | | Reactive Compound 1 (Carbodiimide compound) | 30 | Reactive Compound 2 (Oxazoline compound) | 30 | Reactive compound 3 (Melamine-based compound) | 5 |
| Example 3 | Resin 1 (Polyester) | 100 | | | Reactive Compound 1 (Carbodiimide compound) | 30 | Reactive Compound 2 (Oxazoline compound) | 30 | | |
| Example 4 | Resin 1 (Polyester) | 100 | | | Reactive Compound 1 (Carbodiimide compound) | 30 | Reactive Compound 2 (Oxazoline compound) | 30 | | |
| Example 5 | Resin 1 (Polyester) | 100 | | | Reactive Compound 1 (Carbodiimide compound) | 30 | Reactive Compound 2 (Oxazoline compound) | 30 | Reactive compound 3 (Melamine-based compound) | 10 |
| Example 6 | Resin 1 (Polyester) | 100 | | | Reactive Compound 1 (Carbodiimide compound) | 30 | | | | |
| Example 7 | Resin 1 (Polyester) | 100 | | | Reactive Compound 2 (Oxazoline compound) | 30 | | | | |
| Example 8 | Resin 2 (Acrylic) | 100 | | | Reactive Compound 1 (Carbodiimide compound) | 30 | Reactive Compound 2 (Oxazoline compound) | 30 | | |
| Example 9 | Resin 1 (Polyester) | 100 | | | Reactive Compound 1 (Carbodiimide compound) | 30 | | | | |
| Example 10 | Resin 1 (Polyester) | 100 | | | Reactive Compound 1 (Carbodiimide compound) | 30 | | | | |
| Example 11 | Resin 1 (Polyester) | 100 | | | Reactive Compound 1 (Carbodiimide compound) | 30 | | | | |
| Example 12 | Resin 1 (Polyester) | 100 | | | Reactive Compound 1 (Carbodiimide compound) | 30 | | | | |
| Example 13 | Resin 1 (Polyester) | 100 | | | Reactive Compound 1 (Carbodiimide compound) | 30 | | | | |
| Example 14 | Resin 1 (Polyester) | 100 | | | Reactive Compound 1 (Carbodiimide compound) | 30 | | | | |
| Example 15 | Resin 1 (Polyester) | 100 | | | Reactive Compound 1 (Carbodiimide compound) | 30 | | | | |
| Example 16 | Resin 1 (Polyester) | 100 | | | Reactive Compound 1 (Carbodiimide compound) | 30 | | | | |
| Example 17 | Resin 1 (Polyester) | 100 | | | Reactive Compound 1 (Carbodiimide compound) | 30 | | | | |
| Comparative Example 1 | Resin 3 (Acrylic/Urethane copolymerization) | 15 | Resin 4 (Polyester) | 85 | Reactive compound 4 (Isocyanate compound) | 10 | Reactive Compound 1 (Carbodiimide compound) | 30 | Reactive Compound 2 (Oxazoline compound) 30, Reactive compound 3 (Melamine-based compound) | 15 |
| Comparative Example 2 | Resin 4 (Polyester) | 50 | Resin 5 (Polyester) | 50 | | | | | | |
| Comparative Example 3 | Resin 1 (Polyester) | 100 | | | Reactive Compound 1 (Carbodiimide compound) | 30 | Reactive Compound 2 (Oxazoline compound) | 30 | | |
| Comparative Example 4 | Resin 1 (Polyester) | 100 | | | Reactive compound 3 (Melamine-based compound) | 30 | | | | |

[Table 2-2]

| | Composition of water-based coating composition | | | | Composition of polyester raw material | | Film thickness [nm] of easy-adhesion layer (X) | Coating method | Maximum processing temperature [°C] |
|---|---|---|---|---|---|---|---|---|---|
| | Inorganic particles (D) (Relative parts by mass with respect to binder resin 100) | | | | Blending rate of recycling materials [mass%] | Biomass degree of PET pellets [%] | | | |
| Example 1 | Inorganic particles 1 (170 nm Silica Particles) | 0.5 | | | 0 | 0 | 80 | In-line | 240 |
| Example 2 | Inorganic particles 1 (170 nm Silica Particles) | 0.5 | | | 0 | 0 | 80 | In-line | 240 |
| Example 3 | Inorganic particles 1 (170 nm Silica Particles) | 0.5 | | | 0 | 0 | 80 | Off-line | 180 |
| Example 4 | Inorganic particles 1 (170 nm Silica Particles) | 0.5 | | | 0 | 0 | 80 | Off-line | 210 |
| Example 5 | Inorganic particles 1 (170 nm Silica Particles) | 0.5 | | | 0 | 0 | 80 | In-line | 240 |
| Example 6 | Inorganic particles 1 (170 nm Silica Particles) | 0.5 | | | 0 | 0 | 80 | In-line | 240 |
| Example 7 | Inorganic particles 1 (170 nm Silica Particles) | 0.5 | | | 0 | 0 | 80 | In-line | 240 |
| Example 8 | Inorganic particles 1 (170 nm Silica Particles) | 0.5 | | | 0 | 0 | 80 | In-line | 240 |
| Example 9 | Inorganic particles 2 (100 nm Silica Particles) | 0.5 | | | 0 | 0 | 80 | In-line | 240 |
| Example 10 | Inorganic particles 2 (100 nm Silica Particles) | 5 | | | 0 | 0 | 80 | In-line | 240 |
| Example 11 | Inorganic particles 1 (170 nm Silica Particles) | 0.5 | Inorganic particles 2 (100 nm Silica Particles) | 0.5 | 0 | 0 | 80 | In-line | 240 |
| Example 12 | Inorganic particles 3 (1 µm Silica Particles) | 0.5 | | | 0 | 0 | 80 | In-line | 240 |
| Example 13 | Inorganic particles 3 (1 µm Silica Particles) | 5 | | | 0 | 0 | 80 | In-line | 240 |
| Example 14 | | | | | 0 | 0 | 80 | In-line | 240 |
| Example 15 | Inorganic particles 3 (1 µm Silica Particles) | 5 | | | 0 | 0 | 80 | In-line | 210 |
| Example 16 | Inorganic particles 1 (170 nm Silica Particles) | 0.5 | | | 40 | 0 | 80 | In-line | 240 |
| Example 17 | Inorganic particles 1 (170 nm Silica Particles) | 0.5 | | | 0 | 15 | 80 | In-line | 240 |
| Comparative Example 1 | Inorganic particles 1 (170 nm Silica Particles) | 0.5 | | | 0 | 0 | 80 | In-line | 240 |
| Comparative Example 2 | Inorganic particles 1 (170 nm Silica Particles) | 0.5 | | | 0 | 0 | 80 | In-line | 240 |
| Comparative Example 3 | Inorganic particles 1 (170 nm Silica Particles) | 0.5 | | | 0 | 0 | 80 | Off-line | 150 |
| Comparative Example 4 | Inorganic particles 1 (170 nm Silica Particles) | 0.5 | | | 0 | 0 | 80 | In-line | 240 |

[Table 3-1]

| | | Surface physical properties and optical properties of easy-adhesion layer (X) | | | | | |
|---|---|---|---|---|---|---|---|
| | | Advancing angle of water θa | Receding angle of water θr | Dispersive force γd | Hydrogen bonds γh | Ratio of hydrogen bonds (γh) to dispersive force (γd) γh/γd | Average elastic modulus of 5 μm square measured by AFM |
| | | [°] | [°] | [mN/m] | [mN/m] | [-] | [GPa] |
| | Example 1 | 85.7 | 18.8 | 35.0 | 2.2 | 0.063 | 1.8 |
| | Example 2 | 81.3 | 21.4 | 33.4 | 3.1 | 0.093 | 2.1 |
| | Example 3 | 75.2 | 16.5 | 31.7 | 6.4 | 0.202 | 0.8 |
| | Example 4 | 79.8 | 15.3 | 33.5 | 3.2 | 0.096 | 1.4 |
| | Example 5 | 76.7 | 28.7 | 35.0 | 5.1 | 0.146 | 2.3 |
| | Example 6 | 77.1 | 17.3 | 35.1 | 1.8 | 0.052 | 1.3 |
| | Example 7 | 89.6 | 22.6 | 34.8 | 2.4 | 0.069 | 1.1 |
| | Example 8 | 87 . 1 | 21.7 | 32.5 | 4.5 | 0.138 | 1.9 |
| | Example 9 | 76.4 | 16.2 | 34.9 | 1.8 | 0.052 | 1.3 |
| | Example 10 | 79.3 | 18.8 | 38.2 | 1.9 | 0.050 | 1.5 |
| | Example 11 | 80.5 | 19.4 | 35.5 | 1.8 | 0.051 | 1.3 |
| | Example 12 | 92.4 | 26.8 | 32.8 | 2.8 | 0.085 | 1.5 |
| | Example 13 | 106.3 | 38.8 | 32.1 | 5.4 | 0.168 | 2.3 |
| | Example 14 | 75.2 | 14.4 | 35.9 | 1.7 | 0.047 | 1.1 |
| | Example 15 | 76.8 | 18 | 30.5 | 7.1 | 0.233 | 2.1 |
| | Example 16 | 78.2 | 17.8 | 35.5 | 1.9 | 0.054 | 1.3 |
| | Example 17 | 77.6 | 17.5 | 35.3 | 1.8 | 0.052 | 1.3 |
| | Comparative Example 1 | 68.8 | 45.2 | 26.0 | 6.6 | 0.254 | 5.5 |
| | Comparative Example 2 | 70.6 | 42.1 | 27.9 | 7.2 | 0.258 | 0.7 |
| | Comparative Example 3 | 68.1 | 7.8 | 30.1 | 8.0 | 0.266 | 0.6 |
| | Comparative Example 4 | 72.7 | 46.7 | 35.6 | 9.8 | 0.275 | 2.8 |

[Table 3-2]

| | | Surface physical properties and optical properties of easy-adhesion layer (X) | | | | | |
|---|---|---|---|---|---|---|---|
| | | Variation range in elastic modulus measured by AFM | Elastic modulus domain diameter measured by AFM | Total light transmittance | Haze | Roughness average Ra | Ten-point average roughness Rz |
| | | [GPa] | [nm²] | [%] | [%] | [nm] | [nm] |
| | Example 1 | 1.1 | 80 | 91.8 | 0.8 | 2.0 | 96.4 |
| | Example 2 | 1.7 | 150 | 91.8 | 0.8 | 1.8 | 100.2 |
| | Example 3 | 1. 9 | 270 | 91.8 | 0.8 | 1.8 | 98.5 |

(continued)

| | Surface physical properties and optical properties of easy-adhesion layer (X) | | | | | |
|---|---|---|---|---|---|---|
| | Variation range in elastic modulus measured by AFM | Elastic modulus domain diameter measured by AFM | Total light transmittance | Haze | Roughness average Ra | Ten-point average roughness Rz |
| | [GPa] | [nm$^2$] | [%] | [%] | [nm] | [nm] |
| Example 4 | 1.4 | 220 | 91.8 | 0.8 | 1.9 | 89.7 |
| Example 5 | 2.2 | 270 | 91.8 | 0.8 | 1.7 | 99.6 |
| Example 6 | 1.2 | 80 | 90.8 | 1.1 | 2.1 | 97.7 |
| Example 7 | 1.3 | 90 | 90.5 | 1.3 | 2.0 | 89.4 |
| Example 8 | 1.2 | 80 | 91.8 | 0.8 | 1.9 | 88.9 |
| Example 9 | 1.2 | 80 | 90.6 | 1.2 | 1.1 | 20.1 |
| Example 10 | 1.6 | 80 | 90.2 | 1.8 | 8.2 | 23.1 |
| Example 11 | 1.2 | 80 | 90.3 | 1.5 | 3.4 | 102.2 |
| Example 12 | 1.7 | 80 | 90.1 | 1.9 | 10.2 | 900.5 |
| Example 13 | 2.1 | 120 | 89.4 | 2.5 | 28.0 | 922.7 |
| Example 14 | 1.3 | 80 | 91.8 | 0.8 | 0.8 | 9.9 |
| Example 15 | 2.6 | 230 | 89.6 | 2.4 | 27.8 | 905.6 |
| Example 16 | 1.2 | 80 | 90.5 | 1.3 | 2.3 | 100.5 |
| Example 17 | 1.2 | 80 | 90.6 | 1.2 | 2.2 | 99.8 |
| Comparative Example 1 | 6.1 | 720 | 90.8 | 1.1 | 1.9 | 88.8 |
| Comparative Example 2 | 2.8 | 510 | 90.6 | 1.2 | 1.8 | 90.6 |
| Comparative Example 3 | 2.2 | 340 | 91.8 | 0.8 | 1.7 | 99.1 |
| Comparative Example 4 | 3.2 | 390 | 89.8 | 2.1 | 1.9 | 99.6 |

[Table 4]

| | Processability by water-based coating composition | | | | | Blocking Resistance |
|---|---|---|---|---|---|---|
| | Application appearance (8 cm × 10 cm) | Application appearance (21 cm × 30 cm) | Thickness Unevenness of Processed Layer (Y) | Adhesiveness | Water content | |
| | [-] | [-] | [nm] | [%] | [wtppm] | [-] |
| Example 1 | A | A | 4.2 | 98 | 400 | B |
| Example 2 | A | A | 4.6 | 95 | 400 | B |
| Example 3 | B | B | 6.8 | 92 | 400 | B |
| Example 4 | A | B | 5.6 | 96 | 400 | B |
| Example 5 | B | B | 8.1 | 93 | 400 | C |

(continued)

| | Processability by water-based coating composition | | | | | Blocking Resistance |
|---|---|---|---|---|---|---|
| | Application appearance (8 cm × 10 cm) | Application appearance (21 cm × 30 cm) | Thickness Unevenness of Processed Layer (Y) | Adhesiveness | Water content | |
| | [-] | [-] | [nm] | [%] | [wtppm] | [-] |
| Example 6 | A | A | 3.7 | 99 | 400 | B |
| Example 7 | A | A | 4.4 | 98 | 400 | B |
| Example 8 | A | B | 7.1 | 93 | 400 | B |
| Example 9 | A | A | 3.7 | 98 | 400 | C |
| Example 10 | A | A | 3.7 | 98 | 400 | B |
| Example 11 | A | A | 3.8 | 95 | 400 | A |
| Example 12 | A | A | 3.9 | 90 | 400 | A |
| Example 13 | A | B | 4.6 | 85 | 400 | A |
| Example 14 | A | A | 3.5 | 99 | 400 | D |
| Example 15 | B | B | 6.2 | 86 | 400 | A |
| Example 16 | A | A | 3.8 | 98 | 400 | B |
| Example 17 | A | A | 3.7 | 98 | 400 | B |
| Comparative Example 1 | B | C | 9.1 | 88 | 400 | B |
| Comparative Example 2 | B | C | 10.8 | 85 | 400 | B |
| Comparative Example 3 | B | C | 12.3 | 83 | 400 | C |
| Comparative Example 4 | B | C | 13.1 | 81 | 400 | B |

INDUSTRIAL APPLICABILITY

The present invention relates to an easy-adhesion film which is particularly excellent in coatability and adhesiveness to a water-based coating material and also excellent in transparency, and can be used for magnetic recording materials, packaging materials, optical films such as antireflection films, diffusion sheets, or prism sheets used for flat displays, transparent touch panels, and the like, and particularly can be suitably used for products having a post-processing step using a water-based coating material.

DESCRIPTION OF REFERENCE SIGNS

1: Representative black portion in elastic modulus variation image
2: Representative white portion in elastic modulus variation image

**Claims**

1. A laminated polyester film comprising an easy-adhesion layer (X) on an outermost surface of at least one side of a polyester base material, wherein a ratio (γh/γd) of hydrogen bonds (γh) to a dispersive force (γd) in surface free energy of the easy-adhesion layer (X) is 0.250 or less.

2. A laminated polyester film comprising an easy-adhesion layer (X) on an outermost surface on at least one side of a polyester base material, wherein an advancing angle θa of water in the easy-adhesion layer (X) is 75.0° or more and 110.0° or less, and a receding angle θr of water is 5.0° or more and 40.0° or less.

3. The laminated polyester film according to claim 2, comprising an easy-adhesion layer (X) on an outermost surface of at least one side of a polyester base material, wherein a ratio (γh/γd) of hydrogen bonds (γh) to a dispersive force (γd) in surface free energy of the easy-adhesion layer (X) is 0.250 or less.

4. The laminated polyester film according to any one of claims 1 to 3, wherein a dispersive force (γd) on a surface of the easy-adhesion layer (X) is 32.0 mN/m or more.

5. The laminated polyester film according to any one of claims 1 to 4, wherein an average elastic modulus of the easy-adhesion layer (X) in a 5 um square measured by AFM is 1.0 GPa or more.

6. The laminated polyester film according to any one of claims 1 to 5, wherein an area of a domain of the easy-adhesion layer (X) in a 1 um square elastic modulus variation image measured by AFM is 500 $nm^2$ or less.

7. The laminated polyester film according to any one of claims 1 to 6, which has a haze value of 2.0% or less.

8. The laminated polyester film according to any one of claims 1 to 7, wherein the easy-adhesion layer (X) contains at least two of resins or compounds selected from a polyester resin, an oxazoline compound, and a carbodiimide compound.

9. The laminated polyester film according to any one of claims 1 to 8, wherein at least one surface satisfies (1) and (2).

    (1) A roughness average Ra is 1.0 nm or more and 20.0 nm or less.
    (2) A ten-point average roughness Rz is 50.0 nm or more and 400.0 nm or less.

10. The laminated polyester film according to any one of claims 1 to 9, wherein the polyester base material contains at least one of materials derived from biomass and recycling materials.

11. A laminate comprising a processed layer (Y) on a surface of the easy-adhesion layer (X) of the laminated polyester film according to any one of claims 1 to 10.

12. The laminate according to claim 11, wherein the processed layer (Y) has a water content ratio of 50 wt ppm or more.

13. The laminate according to claim 11 or 12, wherein the processed layer (Y) contains at least one of a hard coating material, an adhesive material, and a printing ink, and contains a dispersant (D).

14. A method for producing the laminated polyester film according to any one of claims 1 to 10, the method comprising a step of forming the easy-adhesion layer (X) by heat curing a coating composition at 170°C or higher.

[Fig. 1]

3: DMT Modulus

[Fig. 2]

<div align="center">

**INTERNATIONAL SEARCH REPORT**

</div>

| International application No. |
|---|
| **PCT/JP2022/030367** |

**A.     CLASSIFICATION OF SUBJECT MATTER**

*B32B 27/36*(2006.01)i; *B05D 7/04*(2006.01)i; *C08J 7/043*(2020.01)i
FI:     B32B27/36; B05D7/04; C08J7/043 A CFD

According to International Patent Classification (IPC) or to both national classification and IPC

**B.     FIELDS SEARCHED**

Minimum documentation searched (classification system followed by classification symbols)

B32B1/00-43/00; B05D1/00-7/26; C08J7/04-7/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | JP 2017-149005 A (TORAY INDUSTRIES, INC.) 31 August 2017 (2017-08-31) claims, paragraphs [0012], [0014], [0063]-[0075], table 2, example 5, comparative examples 1, 3 | 1-12, 14 |
| A | | 13 |
| X | JP 2001-191673 A (TOYOBO CO., LTD.) 17 July 2001 (2001-07-17) claims, paragraphs [0036], [0037], [0041]-[0049], table 1, examples 1-4, comparative example 1 | 1-4, 10-13 |
| A | | 5-9, 14 |
| A | JP 2021-138071 A (TORAY INDUSTRIES, INC.) 16 September 2021 (2021-09-16) entire text, all drawings | 1-14 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/030367**

| Patent document cited in search report | | | Publication date (day/month/year) | Patent family member(s) | Publication date (day/month/year) |
|---|---|---|---|---|---|
| JP | 2017-149005 | A | 31 August 2017 | (Family: none) | |
| JP | 2001-191673 | A | 17 July 2001 | (Family: none) | |
| JP | 2021-138071 | A | 16 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009214531 A
- JP 2011140140 A
- WO 2014156411 A
- JP 2008280421 A
- JP 2002234960 A
- JP 2019028385 A
- US 5906704 A